Europäisches Patentamt

European Patent Office

Office européen des brevets

(19)

(11) **EP 1 012 580 B1**

(12) **EUROPÄISCHE PATENTSCHRIFT**

(45) Veröffentlichungstag und Bekanntmachung des Hinweises auf die Patenterteilung:
**23.06.2004 Patentblatt 2004/26**

(21) Anmeldenummer: **98941205.1**

(22) Anmeldetag: **10.09.1998**

(51) Int Cl.[7]: **G01N 21/77**

(86) Internationale Anmeldenummer:
**PCT/CH1998/000389**

(87) Internationale Veröffentlichungsnummer:
**WO 1999/013320 (18.03.1999 Gazette 1999/11)**

(54) **OPTISCHER SENSOR UND OPTISCHES VERFAHREN ZUR CHARAKTERISIERUNG EINER CHEMISCHEN UND/ODER BIOCHEMISCHEN SUBSTANZ**

OPTICAL SENSOR AND OPTICAL METHOD FOR CHARACTERIZING A CHEMICAL AND/OR BIOLOGICAL SUBSTANCE

CAPTEUR OPTIQUE ET PROCEDE OPTIQUE DE CARACTERISATION D'UNE SUBSTANCE CHIMIQUE ET/OU BIOCHIMIQUE

(84) Benannte Vertragsstaaten:
**CH DE FR GB IT LI NL SE**

(30) Priorität: **10.09.1997 CH 212797**

(43) Veröffentlichungstag der Anmeldung:
**28.06.2000 Patentblatt 2000/26**

(73) Patentinhaber: **Artificial Sensing Instruments ASI AG**
**8052 Zürich (CH)**

(72) Erfinder: **TIEFENTHALER, Kurt**
**CH-8046 Zürich (CH)**

(74) Vertreter: **Frei, Alexandra Sarah**
**Frei Patentanwaltsbüro,**
**Postfach 768**
**8029 Zürich (CH)**

(56) Entgegenhaltungen:
**WO-A-95/03538          US-A- 5 479 260**

- **KUNZ R E ET AL: "Replicated chirped waveguide gratings for optical sensing applications" SENSORS AND ACTUATORS A, Bd. 47, Nr. 1-3, 4. März 1995, Seiten 482-486, XP004092855**
- **DUBENDORFER J ET AL: "Reference pads for miniature integrated optical sensors" SENSORS AND ACTUATORS B, Bd. 38, Nr. 1-3, Januar 1997, Seite 116-121 XP004083680**
- **DUEBENDORFER J ET AL: "Compact integrated optical immunosensor using replicated chirped grating coupler sensor chips" APPLIED OPTICS, Bd. 37, Nr. 10, 1. April 1998, Seiten 1890-1894, XP000754337**

# EP 1 012 580 B1

**Beschreibung**

Die Erfindung bezieht sich auf einen optischen Sensor und ein optisches Verfahren zur Charakterisierung einer chemischen und/oder biochemischen Substanz.

Wellenleitergitterstrukturen mit und ohne chemoempfindlicher Schicht sind in der Literatur beschrieben (siehe z.B. EP 0 226 604 B1, EP 0 482 377 A2. PCT WO 95/03538, SPIE Vol. 1141, 192-200. PCT WO 97/09594, Advances in Biosensors 2 (1992), 261-289, USP 5'479'260, SPIE Vol. 2836, 221-234).

In EP 0 226 604 B1 und EP 0 482 377 A2 oder in Sensors and Actuators A 47, S. 482-486 wird gezeigt, wie die effektive Brechzahl (bzw. der Kopplungswinkel) eines chemosensitiven Gitterkopplers als Sensor-Signal gemessen werden kann. Das Sensor Signal "effektive Brechzahl" bzw. "Kopplungswinkel" ist eine Grösse, die eine starke Temperaturabhängigkeit aufweist.

Stirnseitiges Einkoppeln von Licht in einen Wellenleiter (siehe SPIE Vol. 1141, 192-200) ist unpraktisch, da eine hohe Positionierungsgenauigkeit erforderlich ist. Zudem muss die Stirnseite des Wellenleiters optische Qualität aufweisen. In PCT WO 95/03538 wird gezeigt, wie der absolute Auskopplungswinkel eines Modes gemessen wird. Diese Grösse zeigt jedoch ohne Referenzierung eine starke Temperaturabhängigkeit. In PCT WO 97/09594 werden. chirped Wellenleitergitter vorgestellt, die jedoch ebenfalls eine Abhängigkeit von der Temperatur zeigen. In Sensors and Actuators B 38, S. 116-121 wird eine Messanordnung mit stirnseitiger Lichteinkopplung gezeigt, welche einen Signal- und einen Referenz-,sensing pad' benutzt.

In Advances in Biosensors 2 (1992), 261-289 wird gezeigt, wie die Störung "Porendiffusion" mit dem Dreischichtwellenleitermodell wegreferenziert werden kann. Die Brechzahl des wellenleitenden Films zeigt Drift, während die Schichtdicke des wellenleitenden Films (=Sensor-Signal) stabil bleibt. Die Anordnung ist mit beweglicher Mechanik aufgebaut, was keine schnellen Messungen zulässt. Zudem wird das Sensor-Signal bzw. das aus der Wellenleitergitterstruktur austretende Licht stirnseitig erfasst. Stirnseitige Detektion ist für eine zweidimensionale Anordnung von Wellenleitergitterstruktureinheiten ungeeignet. Weiters werden die effektiven Brechzahlen N(TE) und N(TM) für die beiden Polarisationen TE und TM nicht gleichzeitig erfasst, da für die Erfassung der winkelmässig voneinander getrennten Resonanzeinkopplungskurven ein mechanischer Winkelscan durchgeführt wird.

In USP 5'479'260 wird ein bidi$raktiver bzw. multidiffraktiver Gitterkoppler beschrieben, wobei das Sensor-Signal durch Interferometrie zweier ausgekoppelter Strahlen gleicher oder unterschiedlicher Polarisation (unter Verwendung eines Polarisators) zustandekommt. Interferometrische Messungen` sind kompliziert, da die Intensitäten der beiden Strahlen aufeinander abgestimmt werden müssen. Zudem werden Temperaturschwankungen durch das durch unterschiedliche Polarisationen (unter Verwendung eines Polarisators) generierte interferometrische Signal nur teilweise kompensiert.

In SPIE Vol. 2836, 221-234 wird eine Anordnung für eine Wellenleitergitterstruktur in Zusammenhang mit Fluoreszenz- bzw. Lumineszenzmessungen beschrieben. Diese Anordnung eignet sich jedoch nicht für eine (gegebenenfalls gleichzeitige) (absolute) temperaturkompensierte Messung auf der Basis eines Direktnachweises. Zudem ist die Wellenleitergitterstruktur auf einem Drehtisch montiert.

In Applied Optics 20 (1981), 2280-2283 wird über einen temperaturunabhängigen optischen Wellenleiter berichtet, wobei das Substrat aus Silizium ist. Silizium ist im sichtbaren Spektralbereich absorbierend. Bei chemosensitiven Wellenleitergitterstrukturen wird Licht jedoch bevorzugt von der Substratseite her eingekoppelt. In Applied Optics 20 (1981), 2280-2283 werden zudem nicht temperaturunabhängige Gitterkoppler behandelt.

Die vorliegende Erfindung hat die Aufgabe, einen (bio)chemoempfindliche optischen Sensor zu schaffen und ein optisches Verfahren zur Charakterisierung einer (bio)chemischen Substanz anzugeben, welche die obigen Nachteile nicht aufweisen. Insbesondere sollen mit der Erfindung:

(1) Sensor-Signale, welche eine geringe Temperaturabhängigkeit und/oder eine geringe Abhängigkeit von der Diffusion der Probenflüssigkeit in die Mikroporen eines wellenleitenden Films aufweisen, erzeugt werden können,
(2) sowohl die Messung von (absoluten) Sensor-Signalen bezüglich eines Direktnachweises (absolute Auskopplungswinkel $\alpha$(TE) und $\alpha$(TM) für die TE- bzw. TM-Welle, effektive Brechzahlen N(TE) und N(TM) für die TE- bzw. TM-Welle, Schichtdicke $t_F$ des wellenleitenden Films etc.) als auch die Messung von (absoluten) Sensor-Signalen bezüglich eines Markierungsnachweises (referenzierte Fluoreszenz-, Lumineszenz-, Phosphoreszenz-Signale etc.) möglich sein und
(3) Sensor-Signale bezüglich einer leichten Verkippung und/oder Verschiebung der Wellenleitergitterstruktur stabil bleiben, da (örtliche und winkelmässige) Differenzen von Sensor-Signalen bzw. referenzierte Sensorsignale gemessen werden.

Die Aufgabe wird gelöst durch die Erfindung, wie sie in den unabhängigen Patentansprüchen definiert ist.

Der erfindungsgemässe optische Sensor zur Charakterisierung und/oder zum Nachweis einer chemischen und/oder biochemischen Substanz, beinhaltet mindestens einen optischen Wellenleiter mit einem Substrat, wellenleitendem Material, einem Covermedium und mindestens einer Wellenleitergitterstruktur, mindestens eine Lichtquelle zum Senden von Licht von der Substratseite und/oder von der Covermediumseite her auf zumindest einen Teil der Wellenleitergitterstruktur, Mittel zur Detektion einer Lichtverteilung, von Positionen und/oder Intensitäten von mindestens zwei von der Wellenleitergitterstruktur her ins Substrat und/oder ins Covermedium abgestrahlten Lichtanteilen. Er zeichnet sich im Wesentlichen dadurch aus, dass die Wellenleitergitterstruktur mindestens zwei ‚sensing pads', mit je mindestens einem Gitter und je mindestens einer bio- und/oder chemoempfindlichen Substanz aufweist, wobei für die ‚sensing pads' mindestens eine der folgenden Bedingungen gilt:

(a) die in den ‚sensing pads' führbaren geführten Lichtwellen unterscheiden sich in der Polarisation und/oder in der Modenzahl und/oder in der Wellenlänge,

(b) die beiden den ‚sensing pads' zugeordneten bio- und/oder chemoempfindlichen Substanzen zeigen unterschiedliche Spezifitäten oder die genau einem der ‚sensing pads' zugeordnete bio- und/oder chemoempfindliche Substanz zeigt keine Spezifität,

Weiter gilt, dass die Lichtquelle zur Beleuchtung von Gittern der mindestens zwei 'sensing pads' ausgebildet ist und angeordnet werden kann, und dass Mittel zur Auswertung der detektierten Lichtverteilung, der detektierten Positionen und/oder Intensitäten je von mindestens einem vom ersten ‚sensing pad' her ins Substrat und/oder ins Covermedium abgestrahlten Lichtanteil und von mindestens einem vom zweiten ‚sensing pad' her ins Substrat und/oder ins Covermedium abgestrahlten Lichtanteil zur Bildung eines referenzierten Sensorsignals vorhanden sind.

Beim erfindungsgemässen optischen Verfahren zur Charakterisierung und/oder zum Nachweis einer chemischen und/oder biochemischen Substanz in einer Probe mittels eines mindestens eine Wellenleitergitterstruktur beinhaltenden optischen Wellenleiters (1), wird die Probe in mindestens einer eine chemosensitive oder bio-chemosensitive Substanz aufweisenden Kontaktzone mit dem Wellenleiter in Kontakt gebracht, im Wellenleiter im Bereich der mindestens einen Kontaktzone mindestens zwei Lichtwellen über die Wellenleitergitterstruktur angeregt, wobei die Lichtwellen sich in ihrer Polarisation und/oder ihrer Modenzahl, und/oder ihrer Wellenlänge unterscheiden, und/oder die Positionen der mindestens zwei Lichtwellen verschieden sind und die den Positionen der mindestens zwei Lichtwellen zugeordneten bio- und/oder chemoempfindlichen Substanzen unterschiedliche Spezifitäten zeigen oder die einer Position einer Lichtwelle zugeordnete bio- und/oder chemoempfindliche Substanz keine Spezifität zeigt, mindestens eine der Lichtwellen mit der Probe in Wechselwirkung gebracht, Licht in mindestens zwei unterschiedlichen Anteilen, wovon mindestens ein Anteil vom Bereich der mindestens einen Kontaktzone herkommt, detektiert, und mindestens ein referenziertes Messsignal erzeugt, indem detektierte Lichtanteile der mindestens zwei Anteile des detektierten Lichtes ausgewertet werden.

Die Wellenleitergitterstruktur besteht aus einer oder mehreren Wellenleitergitterstruktureinheiten, welche eindimensional oder zweidimensional (z.B. matrixförmig oder kreisförmig) angeordnet sind.

Eine eventuelle xy-Verschiebung (oder nur x-Verschiebung) des Lesekopfs (der Leseköpfe) von einer Wellenleitergitterstruktureinheit zur anderen bzw. eine eventuelle xy-Verschiebung (oder nur x-Verschiebung) der Wellenleitergitterstruktur kann durchaus zur Anwendung kommen.

Eine Wellenleitergitterstruktureinheit besteht wie erwähnt aus zumindest zwei 'sensing pads' (Sensor-Plattformen, Sensor-Pfaden), die sich zumindest durch eines der folgenden Merkmale voneinander unterscheiden:

(a) Die in den 'sensing pads' geführten Lichtwellen unterscheiden sich in der Polarisation (TE-Welle bzw. TM-Welle), wobei das erzeugte Sensor-Signal nicht durch interferometrische Messung zustandekommt

(b) Die in den 'sensing pads' geführten Lichtwellen unterscheiden sich in der Modenzahl.

(c) Die beiden den 'sensing pads' zugeordneten chemoempfindlichen Schichten zeigen unterschiedliche Spezifität (Ligand 1 bindet (im Innern oder an der Oberfläche) selektiv an die den `sensing pad 1' bedeckende, chemoempfindliche Schicht 1; Ligand 2 bindet (im Innern oder an der Oberfläche) selektiv an die den 'sensing pad 2' bedeckende, chemoempfindliche Schicht 2)

(d) Die dem ersten 'sensing pad' zugeordnete chemoempfindliche Schicht zeigt Spezifität für einen Liganden (mit oder ohne 'non-specific binding'), während die dem zweiten 'sensing pad' zugeordnete (chemoempfindliche) Schicht keine Spezifität (mit oder ohne. 'non-specinc binding') aufweist (Beispiel: Dextran-Schicht, an die kein Erkennungsmolekül (z.B ein Antikörper) gebunden ist).

(e) Die in den 'sensing pads' geführten Lichtwellen unterscheiden sich in der Wellenlänge.

Ein 'sensing pad', in dem geführte Lichtwellen unterschiedlicher Polarisation (TE-Welle bzw. TM-Welle) angeregt werden, zählt als zwei 'sensing pads' (Unterschied in der Polarisation!), sofern das erzeugte Sensor-Signal nicht durch interferometrische Messung zustandekommt.

Ein 'sensing pad', in dem geführte Lichtwellen unterschiedlicher Modenzahl angeregt werden, zählt als zwei 'sensing pads' (Unterschied in der Modenzahl!).

Ein 'sensing pad', in dem geführte Lichtwellen unterschiedlicher Wellenlänge angeregt werden, zählt als zwei 'sensing pads' (Unterschied in der Wellenlänge!).

Erster und zweiter 'sensing pad' können auch als Signal- und Referenzpfad aufgefasst werden. Die beiden 'sensing pads' können (müssen aber nicht) die gleiche Struktur aufweisen.

Die (bio)chemoempnndliche Schicht kontaktiert den wellenleitenden Film in einer Kontaktzone. Diese Kontaktzone beinhaltet normalerweise beim Direktnachweis zumindest ein Gitter (Bei interferometrischen Messungen mit gleicher Polarisation kann für einen Direktnachweis die (bio)chemoempfindliche Schicht auch nur zwischen zwei Gittern liegen (siehe auch EP 0 226 604)) (Bei interferometrischen Messungen mit zwei unterschiedlichen Polarisationen (unter Verwendung eines Polarisators) kann die (bio)chemoempfindliche Schicht auch auf einem multidiffraktiven (bidiffraktiven) Gitter liegen (siehe USP 5'479'260)).

Grundsätzlich kann als mögliches referenziertes Sensor-Signal beispielsweise die Grösse S(Signalpfad) - cS (Referenzpfad) dienen, wobei S(Signalpfad) und S(Referenzpfad) die Sensor-Signale im ersten 'sensing pad' (Signalpfad) bzw. im zweiten 'sensing pad' (Referenzpfad) und c ein Kalibrierungsfaktor sind. Bei gleicher Polarisation ist vernünftigerweise c=1. Bei verschiedenen Polarisationen können mit c die unterschiedlichen Sensitivitäten der beiden Polarisationen berücksichtigt werden. Bei verschiedenen Wellenlängen bzw. Modenzahlen können mit c die unterschiedlichen Sensitivitäten der Wellenlängen bzw. der Modenzahlen berücksichtigt werden. Vorteilhafterweise liegen Signalpfad und Referenzpfad möglichst nahe zusammen.

Das referenzierte Sensor-Signal bei gleicher Polarisation hat weiters den Vorteil, dass Störungen $\delta$ wie z.B. solche verursacht durch Temperaturschwankung, Lichtwellenlängenschwankung, unerwünschte Diffusion von Molekülen in den Wellenleiter bzw. in die chemoempfindliche Schicht, unspezifische Bindungen, Schwankung der Konzentration in den nicht nachzuweisenden Molekülen etc. oder Kombinationen davon wegreferenziert werden können, d. h. das referenzierte Sensor-Signal ist unabhängig von $\delta$, da S(Signalpfad)+$\delta$ - (S(Referenzpfad)+$\delta$) = S(Signalpfad) -S(Referenzpfad) ist.

Vorzugsweise werden Monomode-Wellenleiter verwendet, welche nur den fundamentalen TE-Mode oder nur den fundamentalen TE-Mode und den fundamentalen TM-Mode tragen. Der wellenleitende Film soll vorzugsweise aus einem hochbrechenden Material bestehen, was die Erzeugung hoher Sensitivitäten garantiert. Es kann der wellenleitende Film mit einer chemoempfindlichen Schicht (z.B einer Antikörperschicht (z.B. geeignet für den Nachweis eines entsprechenden Antigens), einer Dextran-Schicht mit Erkennungsmolekül (z.B. Antikörper), Rezeptoren, DNA-Abschnitte, einer Silikon-Schicht zum Nachweis von Kohlenwasserstoffen, etc.) belegt sein. Es kann jedoch auch der wellenleitende Film selbst eine chemoempfindliche Schicht darstellen. Es können auch Streifenwellenleiter zum Einsatz kommen.

Ein 'sensing pad' umfasst zumindest ein Gitter, kann aber auch zumindest ein (eventuell stärker moduliertes) Einkopplungsgitter und zumindest ein Auskopplungsgitter umfassen. Die Gitterperioden der beiden 'sensing pads' können (müssen aber nicht) unterschiedlich sein. Die Gitterperioden von Einkopplungsgitter und Auskopplungsgitter können unterschiedlich sein (sind meistens unterschiedlich).

Einkopplungsgitter und Auskopplungsgitter können unidiffraktive oder multidiffraktive Gitterstrukturen (bidiffraktive Gitter, Gitter mit sich ändernder Gitterperiode und/oder mit sich änderndem Gitterbeugungsvektor, etc. ) sein.

Eine bevorzugte 'sensing pad' Anordnung besteht aus drei Gittern, wobei das mittlere Gitter das Einkopplungsgitter und die beiden äusseren Gitter zwei Auskopplunsgitter darstellen. Mit einem stark modulierten Einkopplungsgitter gelingt es zum Beispiel, mit einem einzigen (bzw. mit zwei) einfallenden (gegebenenfalls leicht fokussierten) Lichtstrahl(en), Moden in Vorwärts- und Rückwärtsrichtung anzuregen. Eine. leichte Verschiebung des einfallenden Lichtstrahls in Modenausbreitungsrichtung oder eine leichte Verkippung der Wellenleitergitterstruktur bezüglich des einfallenden Lichtstrahls (in der Einfallsebene) ändern zwar die Intensität der (in Vorwärts- und/oder Rückwärtsrichtung laufenden) Moden infolge geänderter Kopplungsgeometrie, nicht aber den (die) Auskopplunswinkel bzw. die Differenz der Auskopplungswinkel (= doppelter absoluter Auskopplungswinkel), welche mögliche Sensor-Signale darstellen.

Figur 1 zeigt obige bevorzugte 'sensing pad'-Anordnung sowohl für den TE-Mode als auch für den TM-Mode, wobei die beiden 'sensing pads' nebeneinander liegen.

Figur 2 zeigt weitere Wellenleitergitterstruktureinheiten.

Figur 3 zeigt einen erfindungsgemässen optischen Sensor.

Eine weitere bevorzugte 'sensing pad' Anordnung besteht aus ebenfalls drei Gittern, wobei die beiden äusseren Gitter (eventuell stärker modulierte) Einkopplungsgitter und das mittlere Gitter das Auskopplungsgitter bilden.

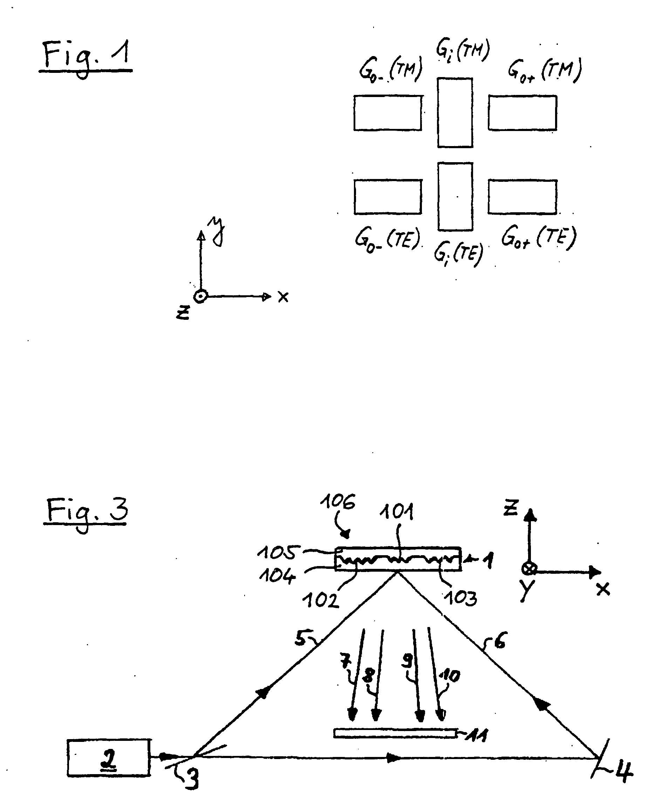

Bei der Detektion von (bio)molekularen Interaktionen mit der Anordnung gemäss Figur 1 (oder äquivalenten Anordnungen) wird die Wellenleiterstruktureinheit mit einer (bio)chemoempfindlichen Schicht belegt, an die dann im Experiment ein spezifischer Bindungspartner bindet, was. zu einer Aenderung der Auskopplungswinkel $\alpha$(TE)= ($\alpha$(TE+) - $\alpha$(TE-))/2 und $\alpha$(TM) = ($\alpha$(TM+) - $\alpha$(TM-))/2 (Notation: z.B.$\alpha$(TE+): Auskopplungswinkel des in +x-Richtung laufenden TE-Modes) bzw. zu einer Aenderung der effektiven Brechzahlen N(TE) und N(TM) und der daraus ableitbaren integriert optischen Grössen - wie z.B. der Schichtdicke $t_F$ des wellenleitenden Films im Dreischichtwellenleiterrnodell (siehe weiter unten) - führt. Verschiedene Wellenleitergitterstruktureinheiten können mit verschiedenen chemoempfindlichen Schichten belegt werden.

Die Auskopplungswinkel der beiden Auskopplungsgitter (bzw. des Auskopplungsgitters) der bevorzugten 'sensing pad' Anordnung erlauben eine Absolutbestimmung des Auskopplungswinkels (bzw. der effektiven Brechzahl), obwohl die Auskopplung der beiden Lichtstrahlen nicht an ein und demselben Ort geschieht.

Bei zwei benachbarten 'sensing pads' für den TE- und den TM-Mode gemäss bevorzugter 'sensing pad' Anordnung (siehe Figur 1) erfolgt die Auskopplung sogar an vier verschiedenen Stellen.

Der 'sensing pad' für den TE-Mode erlaubt die Bestimmung der effektiven Brechzahl N(TE) des TE-Modes. Der 'sensing pad' für den TM-Mode erlaubt die Bestimmung der effektiven Brechzahl N(TM) des TM-Modes. Bei gleichzeitiger Beleuchtung der beiden 'sensing pads' (mit z.B. einem einzigen Lichtfeld mit 45° linear polarisiertem Licht oder zirkular (oder elliptisch) polarisiertem Licht) kann die Bestimmung des Auskopplungswinkels (der effektiven Brechzahl) für den TE- und TM-Mode gleichzeitig erfolgen.

Figur 1 zeigt eine vorteilhafte Ausführungsform einer Wellenleitergitterstruktureinheit. Der 'sensing pad' für den TE-Mode besteht aus dem Einkopplungsgitter $G_i$(TE) und den beiden links und rechts vom Einkopplungsgitter gelegenen Auskopplungsgittern $G_{o+}$(TE) und $G_{o-}$(TE). Der 'sensing pad' für den TM-Mode besteht aus dem Einkopplungsgitter $G_i$(TM) und den beiden links und rechts vom Einkopplungsgitter gelegenen Auskopplungsgittern $G_{o+}$(TM) und $G_{o-}$(TM) und liegt neben dem 'sensing pad' für den TE-Mode. Um den Einfluss von Störungen (z.B. Temperaturschwankungen) gering zu halten, sollten die beiden 'sensing pads' möglichst nahe nebeneinander liegen. Die Gitterstriche sind parallel zur y-Achse ausgerichtet.

Es ist vorteilhaft, wenn die Auskopplungsgitter $G_{o+}$(TE), $G_{o-}$(TE), $G_{o+}$(TM), $G_{o-}$(TM) von den geführten Lichtwellen vollständig beleuchtet werden, wodurch gewährleistet ist, dass beim jeweiligen Auskopplungsgitter die Sensorfläche mit der Fläche des Auskopplungsgitters übereinstimmt. Dies wird dadurch erreicht, indem (a) die Breite des Auskopplungsgitters in y-Richtung kleiner/gleich als die Breite des Einkopplungsgitters in y-Richtung gewählt wird und (b) der Beleuchtungsfleck auf dem Einkopplungsgitter eine y-Breite aufweist, die grösser/gleich als die y-Breite der Auskopplungsgitter ist, und der Beleuchtungsfleck die gesamte y-Breite eines Auskopplungsgitters einschliesst.

Eine vorteilhafte Ausführungsform ist jene, bei der die beiden Einkopplungsgitter $G_i$(TE) und $G_i$(TM) mit einem (oder zwei) (keilförmigen) unter 45° linear polarisierten Lichtfeld(em) simultan beleuchtet werden. Damit können gleichzeitig der TE-Mode und der TM-Mode (in Vorwärts- und Rückwärtsrichtung) angeregt werden und es können auch gleichzeitig alle (im vorliegenden Fall: vier) Auskopplungswinkel gemessen werden. $G_i$(TE) und $G_i$(TM) weisen vorzugsweise unterschiedliche Gitterperioden auf.

Es ist jedoch auch möglich, dass ein 'sensing pad' für sich die Funktion eines 'sensing pads' für den TE-Mode und die Funktion eines 'sensing pads' für den TM-Mode ausübt. Der zweite (daneben liegende) 'sensing pad' ist dann entweder nicht vorhanden oder wird als Kontrolle bzw. Referenz verwendet (Dieser Referenz-'sensing pad' kann z.B. mit einer zweiten. chemoempfindlichen Schicht oder einer nichtspezifischen Schicht, d.h. einer Schicht, die keine Spezifität (mit oder ohne 'non-specific binding') aufweist, belegt sein). Wird das Einkopplungsgitter eines 'sensing pads' unter den entsprechenden Einkopplungswinkeln mit TE-Licht als auch mit TM-Licht (z.B. mit 45° linear polarisiertem Licht) beleuchtet, so werden in dem einen 'sensing pad' söwohl der TE-Mode als auch der TM-Mode (gegebenenfalls sowohl in Vorwärts- als auch in Rückwärtsrichtung) angeregt.

Es ist auch möglich, den TE-Mode nur in Vorwärtsrichtung und den TM-Mode nur in Rückwärtsrichtung (oder umgekehrt) oder den TE-Mode und den TM-Mode nur in Vorwärtsrichtung (oder umgekehrt) anzuregen. Es werden dann die entsprechenden zwei Auskopplungswinkel bzw. deren Differenz gemessen.

Als Detektoren werden vorteilhafterweise 1- oder 2-dimensionale (digitale oder analoge) positionssensitive Detektoren (PSD), Photodiodenarrays, CCD Zeilen- oder Flächenkamera(s) etc. eingesetzt. Die ausgekoppelten Lichtstrahlen werden vorteilhaftweise mit einer Linse fokussiert, wobei der Fokus sich nicht unbedingt exakt auf der Detektorfläche befinden muss. Die Auskopplungsgitter können auch fokussierende Gitter sein. Dies hat den Vorteil, dass die Linsenwirkung bereits in das Auskopplungsgitter integriert ist.

Es ist auch möglich, die Richtung der Gitterstriche des Auskopplungsgitters derart zu wählen, dass die Gitterstriche nicht senkrecht zur Ausbreitungsrichtung- des Modes stehen. Vorteilhafterweise hat die Verkippung der Gitterstriche (bzw. der Gitterbeugungsvektoren) der Auskopplungsgitter zweier benachbarter 'sensing pads' umgekehrtes Vorzeichen. Damit kann eine bessere Separation der ausgekoppelten Lichtwellen erreicht werden.

Das Einkopplungsgitter kann auch derart gewählt werden, dass die Gitterperiode in x-Richtung oder y-Richtung oder x- und y-Richtung nicht konstant bleibt bzw. verlaufend ist. Die Anforderungen an die Genauigkeit der Einstellung des Einfallswinkels werden dadurch relaxiert.

Die in Figur 1 gezeichneten Einkopplungsgitter weisen vorteilhafterweise eine starke Modulation auf und zeichnen sich durch eine kurze Breite in x-Richtung aus. Dadurch werden die Anforderungen an die Genauigkeit der Einstellung des Einfallswinkels relaxiert, da nun Licht aus einem grösseren Winkelsegment einkoppeln kann.

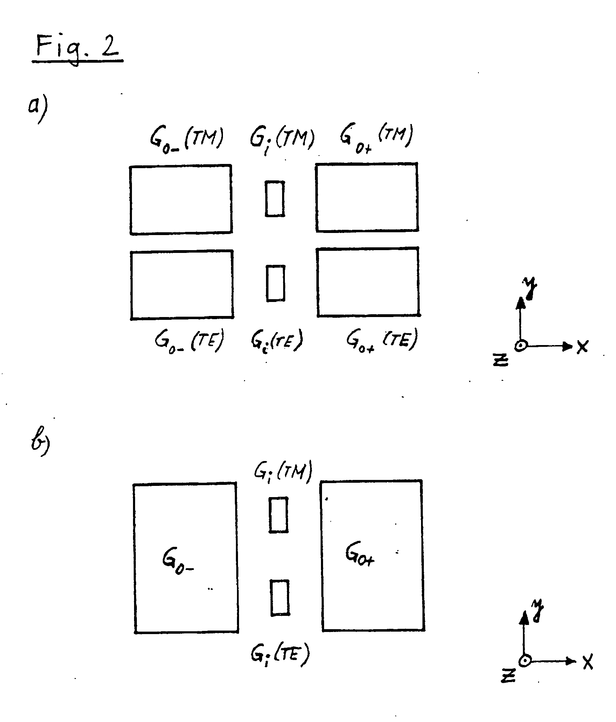

Figuren 2a) und 2b) zeigen zwei weitere Anordnungen von Wellenleitergitterstrukturen, wobei hier die Ausdehnung der Einkopplungsgitter in y-Richtung kleiner ist als jene der Auskopplungsgitter. In Figur 2b) sind ein einheitliches Auskopplungsgitter Go- für die in (-x)-Richtung laufende TE- und TM-Welle und ein einheitliches Auskopplungs-

gitter $G_{o+}$ für die in (+x)-Richtung laufende TE- und TM-Welle gezeichnet.

Figur 3 zeigt eine Ausführungsform eines erfindungsgemässen Sensors. Der Sensor beinhaltet einen Wellenleiter 1 mit einem Substrat 104, einem wellenleitenden Material 105 und einem Covermedium 106 sowie mit einer Wellenleitergitterstruktur gemäss Fig. 1. Eine Lichtquelle 2 erzeugt bspw. 45° linear polarisiertes Licht; zu diesem Zweck kann ein linear polarisierter Laser mit zur Zeichenebene um 45° verkippter Polarisationsebene verwendet werden. Über einen Strahlteiler 3 bzw. einen Spiegel 4 werden zwei einfallende Lichtstrahlen 5, 6 erzeugt. Die Lichtstrahlen 5, 6 fallen durch das Substrat 104 auf die beiden Einkopplungsgitter 101 (von denen in der Seitenansicht von Fig. 3 nur eines sichtbar ist) der zwei ‚sensing pads' (vgl. Fig. 1) und erzeugen im ersten ‚sensing pad'eine TE-Welle in Vorwärts- und Rückwärtsrichtung und im zweiten ‚sensing pad' eine TM-Welle in Vorwärts- und Rückwärtsrichtung. Die Lichtwellen werden über vier Auskopplungsgitter 102, 103 (von denen in der Seitenansicht von Fig. 3 nur zwei sichtbar sind) aus der Wellenleitergitterstruktur ausgekoppelt und ins Substrat 104 abgestrahlt. Nach dem Durchlaufen des Substrates 104 breiten sie sich als Lichtfelder 7-10 aus und fallen auf einen zweidimensionalen CCD-Detektor 11. Gegebenenfalls kann sich zwischen dem Wellenleiter 1 und dem Detektor 11 ein (nicht dargestelltes) Linsensystem befinden.

Wird in den beiden 'sensing pads' mit unterschiedlicher Polarisation und einer der Wellenleitergitterstruktureinheit zugeordneten chemoempfindlichen Schicht gearbeitet, so kann beispielsweise das Sensor-Signal $S=t_F$ (=Schichtdicke des wellenleitenden Films im Dreischichtwellenleitermodell) generiert werden (siehe auch weiter unten). Wird nun eine zweite Wellenleitergitterstruktureinheit, die ebenfalls die Generierung des Sensor-Signals $S=t_F$ zulässt, neben die erste Wellenleitergitterstruktureinheit (nun gesamtheitlich als Signalpfad aufzufassen) gelegt und die zweite Wellenleitergitterstruktureinheit (nun gesamtheitlich als Referenzpfad aufzufassen) beispielsweise mit einer chemoempfindlichen Schicht unterschiedlicher Spezifität bzw. mit einer nichtspezifischen chemoempfindlichen Schicht mit oder ohne 'non-specific binding' (z.B. einer Dextran-Schicht, an die kein Erkennungsmolekül. gebunden ist) belegt, so kann beispielsweise als Sensor-Signal die Grösse $t_F$(gemessen im Signalpfad) - $t_F$(gemessen im Referenzpfad) dienen.

Obwohl die effektiven Brechzahlen N(TE) und N(TM) des TE- bzw. TM-Modes eventuell nicht am gleichen Ort gemessen werden (die beiden 'sensing pads' sind jedoch im Fall eines chemoempfindlichen Sensors mit derselben chemoempfindlichen Schicht bedeckt), können mit der Wellenleitergitterstruktureinheit die interessanten Sensor-Signale S und/oder $\Delta$S mit

$$\Delta S = \Delta\alpha(TM) - \Delta\alpha(TE) = \Delta(\alpha(TM) - \alpha(TE))\ (\Delta S = \Delta(\alpha(TE) - \alpha(TM)))$$

($\alpha$=Auskopplungswinkel)

$$\Delta S = \Delta N(TM) - \Delta N(TE)\ (\Delta S = \Delta N(TE) - \Delta N(TM)),$$

wobei die Schichtdicke des wellenleitenden Films vorzugsweise derart gewählt sein soll, dass für die Sensivität der Brechzahl des Covermediums $\partial N(TE)/\partial n_C = \partial N(TM)/\partial n_C$ gilt, was zumindest den Einfluss von durch Temperaturänderungen hervorgerufenen Brechzahländerungen des Cover-Mediums auf das Sensor-Signal eliminiert (die Brechzahl $n_C$ des Cover-Mediums hängt von der Temperatur ab, d.h. $n_C = n_C(T)$, wobei T die Temperatur ist),

$$\Delta S = \Delta t_F = const\ ((\partial N(TE)/\partial T)^{-1}\Delta N(TE) - (\partial N(TM)/\partial T)^{-1}\Delta N(TM))$$

wobei const = $((\partial N(TE)/\partial T)^{-1}/(\partial N(TE)/\partial t_F) - (\partial N(TM)/\partial T)^{-1}(\partial N(TM)/\partial t_F))^{-1}$ und die Aenderung der Schichtdicke $\Delta t_F$ aus dem Gleichungssystem

$$\Delta N(TE) = (\partial N(TE)/\partial t_F)\Delta t_F + (\partial N(TE)/\partial T)\Delta T$$

$$\Delta N(TM) = (\partial N(TM)/\partial t_F)\Delta t_F + (\partial N(TM)/\partial T)\Delta T \tag{1}$$

berechnet wird und $\partial N/\partial T$ der Temperaturkoeffizient des Wellenleiters samt Cover (=Probe) für den entsprechenden Mode ist ($\partial N/\partial T$ wird unter Berücksichtigung des Temperaturkoeffizienten $(dN/dT)_{GRATING}$ des Gitters experimentell (oder nach Theorie) bestimmt (siehe auch weiter unten)),

$\Delta S = \Delta t_F$, wobei die Schichtdicke $t_F$ mit dem Drei-Schicht-Welleüleitermodell (mit N(TE) und/oder N(TM) als Input-Parameter) berechnet wird,

$\Delta S = \Delta t_A$, wobei die Aenderung der Zusatzschichdicke $\Delta t_A$ aus dem Gleichungssytem

$$\Delta N(TE) = (\partial N(TE)/\partial t_A)\Delta t_A + (\partial N(TE)/\partial T)\Delta T$$

$$\Delta N(TM) = (\partial N(TM)/\partial t_A)\Delta t_A + (\partial N(TM)/\partial T)\Delta T \tag{2}$$

berechnet wird,

$\Delta S = \Delta t_A$, wobei die Zusatzschichtdicke $t_A$ mit dem Vier-Schicht-Wellenleitermodell (bzw. Fünf-Schicht-Wellenleitermodell) berechnet wird,

$\Delta S = \Delta\Gamma$, wobei die Massenbelegung $\Gamma$ (siehe Chem. Commun. 1.997, 1683-1684) mit dem Vier-Schicht-Wellenleitermodell (oder auch mit dem Drei-Schicht-Wellenleitermodell unter Verwendung von Approximationen (siehe J. Opt. Soc. Am. B, Vol. 6, No.2, 209-220)) berechnet wird,

etc. gemessen werden. Die obigen Sensor-Signale sind deshalb interessant, weil sie eine geringe Temperaturabhängigkeit aufweisen. Grundsätzlich ist jedoch bei der Messung noch zu berücksichtigen, dass auch die Gitterperiode eine Temperaturabhängigkeit infolge des thermischen Ausdehnungskoeffizienten des Sensor Chips aufweist. Es gilt $\Delta\Lambda = \alpha\Lambda\Delta T$, wobei $\Delta\Lambda$ die Aenderung der Gitterperiode $\Lambda$, $\Delta T$ die Aenderung der Temperatur T und $\alpha$ der thermische Ausdehnungskoeffizient (typisch 4.5 $10^{-6}$ $K^{-1}$ für Glas und 6.1 $10^{-5}$ $K^{-1}$ für Polykarbonat) sind. Das durch das Gitter verursachte $(dN/dT)_{GRATING} = 1(\lambda/\Lambda)\alpha$, wobei 1 die Beugungsordnung und $\lambda$ die Wellenlänge sind, trägt wie folgt zum Temperaturkoeffizienten $(dN/dT)_{CHIP}$ (=experimentelle Messgrösse) des kompletten Sensor Chips bei: $(dN/dT)_{CHIP} = (dN/dT)_{WAVEGUIDE + SAMPLE} + (dN/dT)_{GRATING}$, wobei $(dN/dT)_{WAVEGUIDE + SAMPLE}$ der Temperaturkoeffizient des Wellenleiters samt Cover (=Probe) ist.

Die Sensor-Signale S und $\Delta S$ können in Funktion der Zeit aufgenommen werden. Aber es kann auch nur ein Anfangs- und Endzustand auf einer Wellenleitergitterstruktureinheit gemessen und verglichen werden, wobei beispielsweise zwischendurch andere Wellenleitergitterstruktureinheiten ausgewertet werden können oder die Wellenleitergitterstruktur gar zwischendurch von der Messeinheit entfernt werden kann, da absolute Winkel bzw. Differenzen von Winkeln (bzw. Abstände (Differenzen von Abständen) von Lichtpunkten) gemessen werden und diese Grössen bezüglich einer

Verkippung bzw. Verschiebung stabil bleiben. Die Bestimmung eines Messwerts kann durch eine Einzelmessung, aber auch durch statistische Auswertung (z.B. Mittelung) mehrerer Einzelmessungen erfolgen.

Falls neben Temperaturänderungen $\Delta T$ noch andere Störungen wie z.B. Diffusion von Probenflüssigkeit in die Mikroporen eines porösen wellenleitenden Films (was zu einer Brechzahländerung $\Delta n_F$ des wellenleitenden Films führt) oder Spannungen (wie z.B. Druckspannung oder Zugspannung) bzw. Spannungsänderungen vorhanden sind oder falls überhaupt nur Porendiffusion vorhanden ist, kann (im ersten Fall unter bestimmten Voraussetzungen (es ist z.B. der zeitliche Verlauf der Porendiffusion mit Temperatur T als Kurvenscharparameter bekannt)) (approximativ) eine (gemeinsame) Störungsgrösse $\xi$ mit $N(t_{F,\xi}) = N(t_F, n_F(\xi), n_S(\xi), n_C(\xi))$ bzw. $N(t_A, \xi) = N(t_F, t_A, n_A(\xi), n_F(\xi), n_S(\xi), n_C(\xi))$ eingeführt werden. Gleichung (1) bzw. (2) nimmt dann die Form

$$\Delta N(TE) = (\partial N(TE)/\partial S)\Delta S + (\partial N(TE)/\partial\xi)\Delta\xi$$

$$\Delta N(TM) = (\partial N(TM)/\partial S)\Delta S + (\partial N(TM)/\partial\xi)\Delta\xi \tag{3}$$

an, wobei $\Delta S$ das Sensor-Signal $\Delta t_F$ (oder $\Delta t_A$) und, beispielsweise im Fall des Drei-Schicht-Wellenleitermodells $\partial N/\partial\xi$ - $(\partial N/\partial n_F)(\partial n_F/\partial\xi) + (\partial N/\partial n_S)(\partial n_S/\partial\xi) + (\partial N/\partial n_C)(\partial n_C/\partial\xi)$ $(+(\partial N/\partial t_F)(\partial t_F/\partial\xi)$, falls $t_F = t_F(\xi))$ ist. Logischerweise folgt unmittelbar aus $\xi = T$ Formel (1) bzw. Formel (2). $\xi = n_F$ beschreibt z.B. die Diffusion bei konstanter Temperatur.

Auch im Fall vom Vorliegen mehrerer Störungen kann mit dem Drei-Schicht-Wellenleitermodell gearbeitet werden und die Modengleichung gelöst werden (Beispiel: Input: N(TE), N(TM), Output: $t_F$, $n_F$ (=Brechzahl des wellenleitenden Films) oder $t_F$, $n_C$ (=Brechzahl des Covermediums) oder $t_F$, $n_S$ (=Brechzahl des Substrats)). Im Drei-Schicht-Welienleitermodell werden wellenleitender Film, chemoempfindliche Schicht und spezifischer Bindungspartner als eine Schicht mit einer Brechzahl betrachtet. Obwohl $n_F$ und $n_C$ (und gegebenenfalls $n_S$) nicht exakt bekannt sind und sich gegebenenfalls während des Experiments aufgrund der Störung ändern, ist die Messgrösse $t_F$ relativ unabhängig von der Störung, hingegen abhängig vom Bindungsvorgang. Die Störung wird sozusagen in die zweite Outputgrösse, den Parameter "Brechzahl", verpackt.

Grundsätzlich sind Porendiffusion und Temperaturschwankungen unabhängige Erscheinungen und sollten durch zwei Störungsgrössen $\xi_1$ und $\xi_2$ beschrieben werden (Verallgemeinerung: k unabhängige Störungen werden durch k unabhängige Störungsgrössen $\xi_1,... \xi_k$, beschrieben). Aus $N(t_F; \xi_1, ..., \xi_k)$ folgt für beide Polarisationen, für eine gegebene Modenzahl und, für eine gegebene Wellenlänge

$$\Delta N = (\partial N/\partial t_F)\Delta t_F + (\partial N/\partial \xi_1)\Delta \xi_1 + ... +(\partial N/\partial \xi_k)\Delta \xi_k \qquad (4)$$

Da die Störungsgrössen die Wellenleiterparameter $t_F$, $n_F$, $n_S$, $n_C$ beeinflussen können, gilt:

$$\partial N/\xi_i = (\partial N/\partial t_F)(\partial t_F/\partial \xi_i)+ (\partial N/\partial n_F)(\partial n_F/\partial \xi_i)+ (\partial N/\partial n_S)(\partial n_S/\partial \xi_i) + (\partial N/\partial n_C)(\partial n_C/\partial \xi_i) \qquad (5)$$

$(1<=i<=k)$(Analoges gilt auch für $N(t_A, \xi_1, ..., \xi_k)$). Für die Porendiffusion ($\xi_1=n_F$) und die Temperaturänderung ($\xi_2=T$) ergibt sich aus (4)

$$\Delta N = (\partial N/\partial t_F)\Delta t_F + (\partial N/\partial n_F)\Delta n_F + (\partial N/\partial T)\Delta T \qquad (6)$$

für beide Polarisationen, gegebener Modenzahl und gegebener Wellenlänge. $\partial N/\partial T$ kann z.B. experimentell bestimmt werden. Werden z.B beide Polarisationen gemessen, so stellt (6) zwei Gleichungen mit drei Unbekannten dar. Werden jedoch Messungen bei mehreren Wellenlängen (unter Berücksichtigung der Brechzahldispersionen) und/oder Modenzahlen durchgeführt, so. können mehrere Gleichungssysteme bestehend jeweils aus drei Gleichungen und drei Unbekannten zusammengestellt und gelöst werden. Wird die Dispersion in $\Delta n_F(\lambda)$ als Unbekannte berücksichtigt ($\lambda$=Wellenlänge), so erhält man z.B. mit zwei Wellenlängen $\lambda_1$ und $\lambda_2$ und zwei Polarisationen vier Gleichungen mit vier Unbekannten $\Delta t_F$, $\Delta n_F(\lambda_1)$, $\Delta n_F(\lambda_2)$, $\Delta T$ und bestimmt daraus die Unbekannten. Die Grösse $\Delta t_F$ bildet das Sensor-Signal:

Analog zu weiter oben können aber auch das Sensor-Signal $t_F$ und die Störungsgrössen aus den (Dreischicht bzw. Vierschicht)Modengleichungen für die beiden Polarisationen und für mehrere Wellenlängen und Modenzahlen bestimmt werden, vorausgesetzt, dass das Gleichungssystem numerisch lösbar ist.

Grundsätzlich hängen auch die Schichtdicken in einem bestimmten Masse von der Temperatur ab (siehe auch Applied Optics 20 (1981), 2280-2283), was jedoch in den Formeln (1),(2) und (3) in der Approximation vernachlässigt wurde. Es ist jedoch auch möglich, bezüglich mindestens einer Probe eine derartige Kombination von (mehreren) Schichten und Substrat zu wählen, dass der Temperaturkoeffizient des Wellenleiters bzw. des Gitterkopplers (bzw. der Wellenleitergitterstruktur) bezüglich mindestens eines Sensor-Signals S (=$\alpha$(TE), $\alpha$(TM), $\alpha$(TM) - $\alpha$(TE), N(TE),N (TM), N(TM) - N(TE), $t_F$, $t_A$ etc.) nahezu null ist (Die Sensitivität bleibt aber nach wie vor hoch). Dabei kann z.B. eine der involvierten Schichten eine $SiO_2$-Schicht sein.

Der absolute Temperaturkoeffizient bezüglich eines Sensor-Signals S ist dS/dT, der entsprechende relative Temperaturkoeffizient ist (1/S)(dS/dT). Mit dN(TE)/dT=0 bzw. dN(TM)/dT=0 werden auch S=N(TE) bzw. S=N(TM) zu interessanten temperaturunabhängigen Sensor-Signalen.

Ist in einem 'sensing pad' nur ein Gitter vorhanden, kann beispielsweise mit der in der Europäischen Patentanmeldung 0 482 377 A2 beschriebenen Reflexionsanordnung (eventuell mit einem Sensor Chip mit Verkippung der Gitterebene zur unteren Substratebene) gemessen werden. Die Messung mit der Reflexionsanordnung an schwach oder stärker modulierten (monodiffraktiven oder multidiffraktiven) Welienleitergittern (homogene Gitter, überlagerte Gitter mit verschiedenen Gitterperioden und/oder Gitterorientierungen, chirped Gitter etc.) kann für TE- wie auch für TM-Wellen durchgeführt werden. Die Modenanregung kann von links, die Auslesung von rechts erfolgen oder auch umgekehrt. Beispielsweise kann in einem 'sensing pad' die Anregung der TE-Welle von links und die Anregung der TM-Welle von rechts erfolgen. In einem zweiten 'sensing pad' (eventuell mit unterschiedlicher Gitterperiode und/oder Gitterorientierung) kann die Anregung umgekehrt zum ersten 'sensing pad' erfolgen. Die Auslösung kann im reflektierten und transmittierten Lichtfeld in nullter oder höherer Beugungsordnung erfolgen. Damit ist es auch mit der Reflexionsanordnung möglich, absolute Kopplungswinkel zu bestimmen. Der gemessene absolute Kopplungswinkel, der im wesentlichen bei gleicher Gitterperiode (und gleicher Beugungsordnung) der halben Winkeldifferenz zwischen den beiden entsprechenden Resonanzminima entspricht, ändert nicht, auch wenn der Sensor Chip leicht verkippt wird. Aus den .absoluten Kopplungswinkeln für die TE-Welle bzw. die TM-Welle können die entsprechenden effektiven Brechzahlen und weitere integriert optische Messgrössen wie z.B. die Schichtdicke $t_F$ des wellenleitenden Films im Dreischichtwellenleitermodell etc. bestimmt werden.

Es ist natürlich auch möglich, dass im ersten 'sensing pad' die Anregung der TE- und TM-Welle von links und die Auslesung von rechts . (gegebenenfalls nur mit einem CCD) und im zweiten 'sensing pad' (eventuell mit unterschiedlicher Gitterperiode) Anregung und Auslesung umgekehrt erfolgt.

Es ist auch möglich, dass die Einfallsebene der Strahlführung verantwortlich für den Referenzpfad (zweiter 'sensing pad') gegenüber der Einfallsebene der Strahlführung verantwortlich für den Signalpfad (erster 'sensing pad') verdreht bzw. verkippt bzw. verdreht und verkippt ist. Erster und zweiter 'sensing pad' können auch zusammenfallen. Es können die Kopplungswinkel für die TE-Welle und die TM-Welle auch bei verschiedenen Wellenlängen und/oder Modenzahlen gemessen werden.

Eine weitere 'sensing pad' Anordnung besteht aus zwei (gleichen) chirped Gitter (Gitter mit verlaufender Gitterperiode), wobei ein Gitter als Einkopplungsgitter und ein Gitter als Auskopplungsgitter dient. Chirped Gitter sind aus der Literatur bekannt (siehe z.B. die Patentanmeldung WO 97/09594). Der Signal-'sensing pad' und der Referenz-'sensing-pad' können gleiche oder auch entgegengesetzte Chirp-Richtung (Richtung, in die die Gitterperiode sich ändert (z.B. grösser wird), ist senkrecht zur Richtung der Modenausbreitung) aufweisen. Die 'sensing pads' können mit derselben (bio)chemoempfindlichen Schicht belegt sein (siehe unten) oder unterschiedliche ((bio)chemoempfindliche) Schichten aufweisen, wobei die ((bio)chemoempfindliche) Schicht des zweiten 'sensing pads' (Referenz-'sensing pads') eine andere (bio)chemoempfindliche Schicht oder eine nichtspezifische ((bio)chemoempfindliche) Schicht mit oder ohne 'nonspecific binding' (z.B. Dextran ohne Erkennungsmolekül) oder eine reine Schutzschicht ist.

Das chirped Gitter, das für die Einkopplung zuständig ist, wird mit einem (nichtkeilförmigen oder gegebenenfalls (leicht) keilförmigen) Lichtband beleuchtet, wovon ein bestimmter Anteil, bei dem die Einkopplungsbedingung erfüllt ist, in den Wellenleiter eingekoppelt wird. Es können die Einkopplungs-chirped-Gitter von Signal-'sensing pad' und Referenz-'sensing pad' auch gleichzeitig (gegebenenfalls mit einem einzigen längeren Lichtband) (gegebenenfalls mit 45° linear polarisiertem oder zirkular (oder elliptisch) polarisiertem Licht (zur Anregung von Moden beider Polarisationen)) beleuchtet werden. Bei Anregung von Moden unterschiedlicher Polarisation unter einem festen Einfallswinkel sind die entsprechenden Gitterperioden der beiden 'sensing pads' verschieden.

Bei gleicher Polarisation, gleicher Chirp-Richtung der beiden 'sensing pads', aber unterschiedlicher (bio)chemoempfindlicher Schicht (z.B. auf Signalpfad: spezifische Schicht, auf Referenzpfad: nichtspezifische Schicht) bildet der Abstand der beiden Lichtpunkte ein referenziertes (absolutes) Sensor-Signal.

Die Anordnung vom vorletzten Absatz kann wiederum für die andere Polarisation (unter Anpassung der Gitterperiode) dupliziert werden und kann wiederum gesamtheitlich als Referenzpfad zur gesamten Anordnung des vorletzten Absatzes (jetzt als Signalpfad zu interpretieren) aufgefasst werden. Es kann hier die Aenderung der effektiven Brechzahl der anderen Polarisation gemessen werden. (Bleibt (bleiben) jedoch die Polarisation(en) gleich und kommt dafür eine andere chemoempfindliche Schicht (mit oder ohne nonspecific binding) oder eine nichtspezifische Schicht mit oder ohne non-specific binding (z:B. Dextran-Schicht ohne Erkennungsmolekül) zum Einsatz, so können die referenzierten Messgrössen (Messgrösse (erste Anordnung) - Messgrösse (zweite Anordnung)) von den Messgrössen $\Delta N$ (TE) oder $\Delta N(TM)$ oder $\Delta N(TM)$ - $\Delta N(TE)$ ermittelt werden).

Es ist auch möglich, dass nur das Einkopplungsgitter als chirped Gitter vorliegt, das Auskopplungsgitter jedoch z.B. monodiffraktiv (oder multidiffraktiv) ist. Die beiden Lichtflecke vom vorvorletzten Absatz wandern aufgrund der (bio)chemischen Bindung nicht mehr senkrecht zur Richtung der Modenausbreitung, da das Auskopplungsgitter auch in der Einfallsebene (vielleicht besser Ausfallsebene genannt) ablenkt (d.h. es ändert der Auskopplungswinkel).

Wird wiederum für Signal-'sensing pad' und Referenz-'sensing pad' mit je drei Gittern (ein Einkopplungsgitter und zwei Auskopplungsgitter oder zwei Einkopplungsgitter und ein Auskopplungsgitter) gearbeitet, wobei Moden in Vorwärts- und Rückwärtsrichtung angeregt werden, ist das Einkopplungsgitter ein chirped Gitter (mit gleicher oder umgekehrter Chirp-Orientierung zwischen den beiden 'sensing pads') und sind die Auskopplungsgitter z.B. monodiffraktiv (oder multidiffraktiv), so können Verschiebungen bzw. Verkippungen der x- und y-Achse (Orientierung der Achsen wie in Figur 1) identifiziert und aufgrund der Absolutmessung eliminiert werden. Für die chemoempfindliche(n) Schicht(en) gelten die gleichen Bemerküngen wie beim 'sensing pad', der aus zwei chirped Gitter besteht. Wird beispielsweise nur der (absolute) Auskopplungswinkel (und/oder daraus ableitbare Messgrössen) als Sensor-Signal betrachtet, so kann das chirped Einkopplungsgitter auch mit einem keilförmig einfallenden Lichtband beleuchtet werden. Auch hier kann obige Anordnung (Signal- u. Referenzpfad) dupliziert werden und als neuer Referenzpfad (mit oder ohne unterschiedlicher chemoempfindlicher Schicht oder mit nichtspezifischer Schicht) zur obigen Anordnung (jetzt gesamtheitlich als Signalpfad aufzufassen) aufgefasst werden.

Die Probenflüssigkeit(en) wird (werden) durch eine 'well' bzw. eine Matrix von 'wells', eine Durchflusszelle bzw. eine Matrix von Durchflusszellen, eine Kapillarküvette bzw. eine Matrix von Kapillarküvetten etc. in Kontakt mit dem Wellenleiter bzw. der (den) chemoempfindlichen Substanz(en) gebracht.

Zweidimensionale Anordnungen führen z.B. zu einer 'microplate' mit 96, 384, 1536 'wells' etc. (Aber auch andere zweidimensionale Formate.(z.B. Scheiben) sind möglich). Aber auch die Herstellung einzelner Streifen (eindimensionale Anordnung) ist möglich. Die Streifen können z.B. auch in den Rahmen einer Microplate eingesetzt werden. Die 'wells' können als separate Probenzelle (bzw. Probenzellenplatte) auf die Sensorchip-Platte, welche die Wellenleitergitterstruktureinheiten enthält, aufgebracht werden. Es ist jedoch auch möglich, das Substrat selbst derart mit Vertiefungen zu versehen, dass diese Vertiefungen bereits die Funktion der 'wells' bzw. der Durchflussküvetten bzw. der Kapillarküvetten übernehmen. In den letzteren beiden Fällen muss die Sensorchip-Platte mit einer mit Bohrungen versehenen Deckplatte abgedeckt werden. Im ersten Fall kann die Sensorchip-Platte mit einer Deckplatte (ohne Bohrungen) abgedeckt werden, um z. B. Verdunstung zu vermeiden. Die Bohrungen diene der Zu- bzw. Abfuhr der Probe bzw. der Entlüftung. Vorteilhafterweise wird mit Kunststoffsubstraten und Spritzgusstechniken oder Hot-Embossing-Techniken gearbeitet. Aber auch Sol-Gel-Techniken, UV-Härtetechniken für organisch/anorganische Komposite, Glasprägetechniken (Hot-Embossing oder (Injection) Molding), Aetztechniken, Laserabtragung etc. bilden eine Alternative.

Die Gitterstrukturen können mit Prägetechniken (Heisssprägung, Kaltsprägung, UV-Härtung) oder Spritzgusstechnik in Kunststoff, Sol-Gel, Glas, UV-härtbaren organischen oder anorganische Materialien oder organisch/anorganischen Kompositen, Ormoceren oder Nanomeren, mit Laserabtragung gepaart mit Interferometrie, Holographie und/oder Phasenmaskentechnik, Photolithographie gepaart mit Nass- oder Trokkenätzung, mit Photopolymerisation (siehe z.B. P. Coudray, et al., Crit. Rev. Opt. Sci. Tech. (SPIE) CR68 (1997), 286-303) oder mit Gusstechniken (z:B in Sol-Gel) etc. hergestellt werden. Kunststofispritzgusstechniken, wie sie bei der Herstellung von Compact Disc Scheiben (z.B. in Polykarbonat) eingesetzt werden, sind besonders geeignet. Die Gitterstruktur kann im (bzw. auf dem) Substrat oder in (bzw. auf) einer Schicht sein oder in Kombinationen davon vorliegen. Die Gitterstrukturen können Oberflächenretiefgitter (bzw. Interface-Reliefgitter) oder Brechzahlgitter (bzw. Volumengitter) oder Kombinationen davon sein. Der wellenleitende Film kann eine Sol-Gel-Schicht ($SiO_2$-$TiO_2$, $TiO_2$, (nichtporöses) hochbrechendes Bleisilikatglas etc.), eine organisch/anorganische Kompositschicht, eine Polymerschicht, eine PVD-, eine CVD-, eine PE-CVD-, eine PI-CVD-Schicht, eine photopolymerisierbare hochbrechende Schicht (z.B. photopolymerisierbares $TiO_2$) etc. oder Kombinationen davon sein. Es ist auch möglich, dass eine Schicht (mit vorzugsweise niedriger Brechzahl, z.B. aus $SiO_2$ Sol Gel, $SiO_2$-$TiO_2$ Sol Gel (mit niedrigem $TiO_2$-Gehalt), Bleisilikatglas Sol Gel (mit niedrigem Bleigehalt), floatglasähnlichem Sol-Gel etc.) die Gitterstruktur enthält und eine zweite Schicht (z.B. aus $SiO_2$-$TiO_2$, $TiO_2$, $Ta_2O_5$, $HfO_2$, $ZrO_2$, $Nb_2O_5$, $Si_3N_4$, Bleisilikatglas etc.) den wellenleitenden Film bildet. Dadurch, dass der Erweichungspunkt von Bleisilikatglas deutlich unter dem Erweichungspunkt von Glas liegt, kann das Bleisilikatglas zum Schmelzen gebracht werden, ohne dabei das Glas zu beschädigen. Der Schmelzvorgang führt zu nahezu porenfreiem Bleisilikatglas. Haben Substrat und die Schicht(en) ähnliche thermische Ausdehnungskoeffizienten, kann die Bildung von Mikrorissen verhindert werden (Mikrorisse erhöhen die Dämpfungswerte der Moden). PVD- und CVD-Prozesse erlauben die Herstellung von sehr kompakten wellenleitenden Filmen.

Das Substrat kann aus Kunststoff (z.B. Polykarbonat, PMMA, Polystyrol etc.), Sol-Gel oder aus Glas (Floatglas, Objektträger, Natronkalkglas, Borosilikatglas, alkalifreies Glas, Quartz etc.) sein. Es kann aber auch das Gittermaterial als Substratmaterial verwendet werden (z.B. Ormocer, UV härtbares Material).

Die Probenzelle kann aus Vertiefungen (Löchern, Bohrungen), aber auch aus Durchflusszellen bestehen. Diese Durchflusszellen können auch derart konfiguriert sein, dass die Probenflüssigkeit mit der Nadel eines Pipettierungsroboters zugeführt werden kann. Es ist auch möglich, dass eine zweite Probenzelle bestehend aus Durchflussküvetten in eine erste Probenzelle mit Vertiefungen (Löchern) eingesetzt wird.

In das Substrat bzw. irgendwo auf der Sensorchip-Platte können Positionierungsmarken (Löcher, Vertiefungen, Stifte, Ueberhöhungen etc.) ein- bzw. aufgebracht sein. Diese Positionierungsmarken garantieren, dass der einfallende Lichtstrahl das (die) Einkopplungsgitter trifft. Die Identifizierung der. Positionierungsmarke erfolgt über die Messeinheit.

Für die Separation der das Sensorsignal tragenden Lichtwelle von anderen Lichwellen (z.B. von der an der Unterseite des Substrats reflektierten Lichtwelle) ist es auch vorteilhaft, wenn der wellenleitende Film nicht planparallel zur Unterseite des Substrates ist. Diese Nichtplanparallelität kann unter anderem in Form von Keilen, Prismen, Zylinderprismen, sphärischen Linsen, Zylinderlinsen etc. vorliegen.

Mit der chemosensitiven Wellenleiterstruktur können nicht nur ein Direktnachweis sondern auch Markierungsnachweise durchgeführt werden. Die Verwendung eines 'refractive index labels' (z.B. ein Kunststoffkügelchen (z.B. Latex-Kügelchen), biochemische und biologische Fragmente *etc.*) kann bereits als Markierungsnachweis aufgefasst werden. Es lassen sich damit beispielsweise Sandwich-Assays oder Competition-Assays realisieren.

Als Lichtquelle wird vorteilhafterweise eine monochromatische Lichtquelle wie z.B ein (gepulster) Laser, eine (gepulste) Laserdiode, eine (gepulste) LED mit oder ohne Filter im (infra)roten bzw. blau-grünen bzw. ultravioletten Spektralbereich verwendet. Aber auch thermische Lichtquellen mit einem Filter können zur Anwendung kommen. Rotblau-grüne bzw. ultraviolette Wellenlängen haben den Vorteil, dass (a) die Sensitivität für den Direktnachweis steigt und (b) mit derselben Lichtquelle neben 'direct sensing' auch Fluoreszenz-, Phosphoreszenz- und Lumineszenztests durchgeführt werden können, wobei die Anregung der Fluoreszenz, Phosphoreszenz oder Lumineszenz über die evaneszente Welle (in Form einer TE-Welle oder TM-Welle oder TE- und TM-Welle) geschieht. Das Fluoreszenz-, Phosphoreszenz- und Lumineszenzlicht kann als ebene oder auch als geführte Lichtwelle beobachtet werden. Das durch die TE-Anregungswelle verursachte Fluoreszenzlicht (bzw. dessen Intensität) kann mit dem durch die TM-Anregungswelle verursachten Fluoreszenzlicht (bzw. dessen Intensität) referenziert bzw. verglichen werden, wobei vorteilhafterweise die Intensität der Anregungswelle mitberücksichtigt wird und eventuell die Detektoren durch den Einsatz von Polarisatoren polansationsempSndtich gemacht werden. Die geführte Fluoreszenz-, Phosphoreszenz- und Lumineszenzlichtwelle kann über ein Gitter ausgekoppelt und einem Detektor zugeführt werden. Es können Sandwich-Assays, Competition-Assays etc. durchgeführt werden, wobei zumindest ein beteiligter Bindungspartner fluoreszenz (phosphoreszenz, lumineszenz)-markiert ist. Die, (bio)chemosensitive Schicht kann auf dem Gitter, kann aber auch nur zwischen den Gittern bzw. ausserhalb des Gitters vorhanden sein.

Fluoreszenz-, Lumineszenz- und Phosphoreszenzmessungen zeigen eine geringe Temperaturabhängigkeit. Für Fluoreszenz-, Lumineszenz- und Phosphoreszenzmessungen sind rein anorganische Wellenleitergitterstrukturen besonders geeignet (Gitter wird in Glas oder Sol-Gel (z.B. $SiO_2$) oder im anorganischen wellenleitenden Film, wellenleitender Film aus anorganischem Material (z.B. $Si_3N_4$ oder Oxidschichten wie z.B. $TiO_2$ oder $Ta_2O_5$ oder Bleisilikatschichten etc.) hergestellt). Anorganische Materialien zeigen z.B. eine geringe Eigenfluoreszenz. Wird mit einem Kunststoffsubstrat gearbeitet, so empfiehlt es sich, eine anorganische tietbrechende Zwischenschicht (z.B. $SiO_2$) auf das Kunststoffsubstrat aufzubringen. Die Schichtdicke dieser Zwischenschicht ist so gross zu wählen, dass die darin laufende evaneszente Welle das Kunststoffsubstrat praktisch nicht mehr "sieht". Dadurch wird zumindest die durch die geführte Lichtwelle erzeugte Eigenfluoreszenz stark reduziert.

Werden die Intensität der (eventuell ausgekoppelten) Anregungswelle als auch jene der (eventuell ausgekoppelten) Emissionswelle gemessen, so können verschiedene Störfaktoren (wie z.B. solche, die durch Intensitätsschwankungen der Anregungswelle verursacht werden) durch Referenzierung eliminiert werden. Das referenzierte Sensor-Signal ist dann beispielsweise die Intensität der Fluoreszenz (Lumineszenz, Phosphoreszenz) geteilt durch die Intensität der Anregungslichtwelle. Die Intensität der Anregungswelle kann vor dem Eindringen der Anregungswelle in die chemoempfindliche Schicht oder nach dem Austritt der Anregungswelle aus der chemoempfindlichen Schicht oder an beiden Stellen gemessen werden. Mit referenzierten Markierungsnachweisen können absolute kinetische Messungen als auch absolute Endpunktsmessungen durchgeführt werden. Bei absoluten (Endpunkts)Messungen kann die (bio)chemische Interaktion auf der Wellenleitergitterstruktur auch ausserhalb des Messinstruments erfolgen.

Zu beachten ist auch, dass mit einem (digitalen oder analogen) PSD (position sensitive detector) (1-dimensional oder 2-dimensional), einem Photodiodenarray (PDA) (1-dimensional oder 2-dimensional) oder einem CCD-Array (1-dimensional oder 2-dimensional) nicht nur (Positionen von) Lichtfeldverteilungen sondern auch Intensitäten gemessen werden können.

Es können (müssen aber nicht) zum Teil mit denselben Detektoren ein Direktnachweis wie auch ein Markierungsnachweis (auf Fluoreszenz-, Lumineszenz-, Phosphoreszenzbasis) durchgeführt werden. Evaneszenzfeldanregung kann auch mit zeitaufgelösten Messtechniken (z.B. Time resolved tluorescence oder luminescence) kombiniert werden. Bei zeitaufgelösten Messtechniken wird mit einer gepulsten Lichtwelle (vorwiegend im sichtbaren bzw. ultravioletten Wellenlängenbereich) die Markierung angeregt. Die Abklingzeiten für die Fluoreszenz (Lumineszenz, Phosphoreszenz) von freien und gebundenen Markierungsmolekülen (mit oder ohne Energie-Transfer zwischen zwei verschiedenen Fluoreszenzmolekülen (siehe z.B. Förster-Theorie in CIS Bio International, November 1995, Number 3)) ist unterschiedlich. Die Eindringtiefe der geführten Anregungswelle in die Probe legt das "Beobachtungsvolumen" fest.

Interessant ist es, dass mit den vorliegenden Wellenleitergitterstrukturen Absolutmessungen sowohl markierungsfrei als auch fluoreszenz (phosphoreszenz, lumineszenz)-markiert (gegebenenfalls auch gleichzeitig) durchgeführt werden können. In beiden Fällen kann für die Lichteinkopplung auf eine bewegliche Mechanik verzichtet werden. Natürlich können auch (kontinuierliche) kinetische Messungen bzw. Echtzeitmessungen auf nicht absoluter Basis durchgeführt werden.

Mit einem 'sensing pad' (Signalpfad) (mit oder ohne chemoempfindlicher Schicht) können auch Lichtabsorptionsmessungen durchgeführt werden, indem die Intensitäten der (über Gitter, Prisma, Taper oder Stirnseite) ausgekoppelten Lichtstrahlen (gegebenenfalls mit denselben Detektoren) eventuell auch bei verschiedenen Wellenlängen gemessen werden. Die Lichtabsorptionsänderung kann direkt oder indirekt (z.B. durch Enzyme) durch die (bio)chemische Interaktion der Probe mit der chemoempfindlichen Schicht oder durch die Probe selbst oder durch die in der Probe ablaufenden Reaktionen (mit oder ohne zusätzlichem Reaktionspartner) zustandekommen. Die chemoempfindliche Schicht kann auf dem Gitter, zwischen den Gittern bzw. ausserhalb des Gitters vorhanden sein. Lichtintensitätsschwankungen der Lichtquelle können durch Referenzierung (z.B. mit einem Strahlteiler und einem Referenzdetektor oder über eine nicht eingekoppelte Beugungsordnung und einem Referenzdetektor) eliminiert werden. Referenzierung kann auch dadurch erfolgen, dass der zweite 'sensing pad' (Referenzpfad) mit einer Schutzschicht bedeckt ist und deshalb nicht mit der Probe interagieren kann. Das referenzierte Sensorsignal ist dann die Intensität des Signalpfaddetektors geteilt durch die Intensität des Referenzpfaddetektors.

Die Schutzschicht kann jedoch auch eine (poröse) (chemoempfindliche) Schicht sein, die keine Spezifität (mit oder ohne 'non-specific binding') oder Spezifität für einen anderen Liganden aufweist.

Referenzierung kann auch (muss aber nicht) über eine Hälfte eines 'sensing pads' erfolgen (z.B. Signal-Pfad: Mode in Vorwärtsrichtung, Referenz-Pfad: Mode in Rückwärtsrichtung).

**Patentansprüche**

1. Optischer Sensor zur Charakterisierung und/oder zum Nachweis einer chemischen und/oder biochemischen Substanz, beinhaltend

   mindestens einen optischen Wellenleiter (1) mit einem Substrat (104), wellenleitendem Material (105), einem Covermedium (106) und mindestens einer Wellenleitergitterstruktur,
   mindestens eine Lichtquelle (2) zum Senden von Licht von der Substratseite und/oder von der Covermediumseite her auf zumindest einen Teil der Wellenleitergitterstruktur,
   Mittel zur Detektion einer Lichtverteilung, von Positionen und/oder Intensitäten von mindestens zwei von der Wellenleitergitterstruktur her ins Substrat und/oder ins Covermedium abgestrahlten Lichtanteilen,
   **dadurch gekennzeichnet,**
   **dass** die Wellenleitergitterstruktur mindestens zwei ‚sensing pads', mit je mindestens einem Gitter (101) und je mindestens einer bio- und/oder chemoempfindlichen Substanz aufweist,
   wobei für die ‚sensing pads' mindestens eine der folgenden Bedingungen gilt:

   (a) die in den ‚sensing pads' geführten Lichtwellen unterscheiden sich in der Polarisation und/oder in der Modenzahl und/oder in der Wellenlänge,
   (b) die beiden den ‚sensing pads' zugeordneten bio- und/oder chemoempfindlichen Substanzen zeigen unterschiedliche Spezifitäten oder die genau einem der ‚sensing pads' zugeordnete bio- und/oder chemoempfindliche Substanz zeigt keine Spezifität,

   **dass** die Lichtquelle zur Beleuchtung von Gittern (101) der mindestens zwei ‚sensing pads' ausgebildet ist und angeordnet werden kann,
   und **dass** Mittel zur Auswertung der detektierten Lichtverteilung, der detektierten Positionen und/oder Intensitäten je von mindestens einem vom ersten ‚sensing pad' her ins Substrat und/oder ins Covermedium abgestrahlten Lichtanteil und von mindestens einem vom zweiten ‚sensing pad' her ins Substrat und/oder ins Covermedium abgestrahlten Lichtanteil zur Bildung eines referenzierten Sensorsignals vorhanden sind.

2. Optischer Sensor nach Anspruch 1, **dadurch gekennzeichnet, dass** die Lichtquelle derart ausgebildet und angeordnet ist, dass die beiden Gitter mit einem einzigen Lichtfeld beleuchtet werden.

3. Optischer Sensor nach Anspruch 1 oder 2, **dadurch gekennzeichnet dass** Mittel zum unbeweglichen Fixieren des Wellenleiters bezüglich der Lichtquelle vorhanden sind, und dass Mittel zur Bildung eines referenzierten Sensorsignals durch eine statistische Auswertung vorhanden sind.

4. Optischer Sensor nach einem der vorangehenden Ansprüche, **dadurch gekennzeichnet, dass** die Wellenleitergitterstruktur so ausgebildet ist, dass sie mindestens vier abgestrahlten Lichtanteilen besitzt, welche der Vorwärts- und Rückwärtsrichtung des TE und des TM-Modes entsprechen.

5. Optischer Sensor nach einem der vorangehenden Ansprüche, **dadurch gekennzeichnet, dass** die beiden 'sensing pads' nebeneinander liegen.

6. Optischer Sensor nach einem der vorangehenden Ansprüche, **dadurch gekennzeichnet, dass** die beiden 'sensing pads' sich in zumindest einer Gitterperiode unterscheiden.

7. Optischer Sensor nach einem der vorangehenden Ansprüche, **dadurch gekennzeichnet, dass** die beiden 'sensing pads' ineinander oder übereinander liegen.

8. Optischer Sensor nach einem der vorangehenden Ansprüche, **dadurch gekennzeichnet, dass** die beiden 'sensing pads' dieselbe Gitterperiode oder dieselben Gitterperioden aufweisen.

9. Optischer Sensor nach einem der vorangehenden Ansprüche, **dadurch gekennzeichnet, dass** sich zumindest ein Gitter im Volumen und/oder an einer Grenzfläche eines im Wellenleiter beinhalteten Materials befindet.

10. Optischer Sensor nach einem der vorangehenden Ansprüche, **dadurch gekennzeichnet, dass** jeder der mindestens zwei ‚sensing pads' mindestens ein Einkopplungsgitter und ein Auskopplungsgitter aufweist.

11. Optischer Sensor nach Anspruch 10, **dadurch gekennzeichnet, dass** ein 'sensing pad' der Wellenleitergitterstruktureinheit zwei Auskopplungsgitter und ein zwischen den Auskopplungsgittem angeordnetes Einkopplungsgitter, oder zwei Einkopplungsgitter und ein zwischen den Einkopplungsgittern angeordnetes Auskopplungsgitter enthält.

**12.** Optischer Sensor nach einem der vorangehenden Ansprüche, **dadurch gekennzeichnet, dass** die dem ersten 'sensing pad' zugeordnete chemoempfindliche oder biochemoempfindliche Substanz Spezifität für einen Liganden mit oder ohne 'non-specific binding' zeigt, während die dem zweiten 'sensing pad' zugeordnete chemoempfindliche oder biochemoempfindliche Substanz überhaupt keine Spezifität mit oder ohne 'non-specific binding' aufweist.

**13.** Optischer Sensor nach einem der vorangehenden Ansprüche, **dadurch gekennzeichnet, dass** eine 'well' bzw. eine Matrix von 'wells' auf die Wellenleitergitterstruktur aufgebracht oder in die Wellenleitergitterstruktur eingebracht ist.

**14.** Optischer Sensor nach einem der vorangehenden Ansprüche, **dadurch gekennzeichnet, dass** eine Durchflusszelle bzw. eine Matrix von Durchflusszellen oder in die Wellenleitergitterstruktur eingebracht ist.

**15.** Optischer Sensor nach einem der vorangehenden Ansprüche, **dadurch gekennzeichnet, dass** eine Kapillarküvette bzw. eine Matrix von Kapillarküvetten auf die Wellenleitergitterstruktur aufgebracht oder in die Wellenleitergitterstruktur eingebracht ist.

**16.** Optischer Sensor nach einem der vorangehenden Ansprüche, **gekennzeichnet durch** ein zwischen dem Wellenleiter (1) und den Detektionsmitteln angeordnetes Linsensystem.

**17.** Optischer Sensor nach einem der vorangehenden Ansprüche, **dadurch gekennzeichnet, dass** die mindestens zwei 'sensing pads' in einem Abstand zueinander angeordnet sind.

**18.** Optischer Sensor nach einem der vorangehenden Ansprüche, **dadurch gekennzeichnet, dass** die Detektionsmittel ein ein- oder zweidimensionales Array von Photodioden, eine CCD-Zeilenkamera, eine CCD-Flächenkamera, einen einoder zweidimensionalen positionsempfindlichen analogen Detektor oder einen 1-oder 2-dimensionalen digitalen positionsempfindlichen Detektor aufweisen.

**19.** Optischer Sensor nach einem der vorangehenden Ansprüche, **dadurch gekennzeichnet, dass** mindestens eine der chemosensitiven oder bio-chemosensitiven Substanzen Dextran ohne ein Erkennungsmolekül ist.

**20.** Optischer Sensor nach einem der vorangehenden Ansprüche, **dadurch gekennzeichnet, dass** die Lichtquelle eine Laserdiode oder eine LED beinhaltet.

**21.** Optischer Sensor nach einem der vorangehenden Ansprüche, **dadurch gekennzeichnet, dass** die Gitterstriche der Wellenleitergitterstruktur eine Ebene mit einer ersten Richtung (y) parallel zu den Gitterstrichen und einer zweiten Richtung (x) senkrecht zur ersten Richtung definieren, dass die Gitter der zwei ‚sensing pads' einander benachbart angeordnet sind und voneinander in der ersten Richtung (y) beabstandet sind.

**22.** Optischer Sensor nach einem der vorangehenden Ansprüche, **dadurch gekennzeichnet, dass** die Gitterstriche der Wetienleitergitterstruktur eine Ebene mit einer ersten Richtung (y) parallel zu den Gitterstrichen und einer zweiten Richtung (x) senkrecht zur ersten Richtung definieren, dass jeder der mindestens zwei ‚sensing pads' mindestens ein Einkopplungsgitter und mindestens ein Auskopplungsgitter aufweist und dass die Ausdehnung des mindestens einen Einkopplungsgitters in y-Richtung kleiner ist als jene des mindestens einen Auskopplungsgitters.

**23.** Optischer Sensor nach einem der vorangehenden Ansprüche, **dadurch gekennzeichnet, dass** die chemosensitiven oder bio-chemosensitiven Substanzen als chemosensitive oder bio-chemosensitive Schichten vorhanden sind.

**24.** Optischer Sensor nach einem der Ansprüche 1-22, **dadurch gekennzeichnet, dass** der Wellenleiter die chemosensitiven oder bio-chemosensitiven Substanzen beinhaltet.

**25.** Optischer Sensor nach einem der vorangehenden Ansprüche, **dadurch gekennzeichnet, dass** das Substrat aus Kunststoff besteht.

**26.** Optischer Sensor nach Anspruch 25, **dadurch gekennzeichnet, dass** auf das Substrat eine anorganische niederbrechende Schicht aufgebracht ist.

**27.** Optischer Sensor nach einem der vorangehenden Ansprüche, **dadurch gekennzeichnet, dass** die Gitterstrukturen aus UV-härtbaren organischen oder anorganischen Materialien oder organisch/anorganischen Kompositen bestehen.

**28.** Optischer Sensor nach einem der vorangehenden Ansprüche, **dadurch gekennzeichnet, dass** das wellenleitende Material mindestens einen wellenleitenden Film aus einem hochbrechenden Material beinhaltet, was die Erzeugung hoher Sensitivitäten garantiert.

**29.** Optischer Sensor nach einem der vorangehenden Ansprüche, **dadurch gekennzeichnet, dass** das wellenleitende Material mindestens eine hochbrechende Bleisilikatglas- oder eine photopolymerisierbare, hochbrechende Schicht oder eine Polymerschicht oder eine PVD-Schicht oder eine CVD-Schicht oder Kombinationen davon beinhaltet.

**30.** Optischer Sensor nach einem der vorangehenden Ansprüche, **dadurch gekennzeichnet, dass** die sensing pads so ausgeführt sind, dass sich die in ihnen geführten Lichtwellen in der Wellenlänge und in der Polarisation unterscheiden.

**31.** Optischer Sensor nach einem der vorangehenden Ansprüche, **dadurch gekennzeichnet, dass** das wellenleitende Material nicht planparallel zu einer Unterseite des Substrates ist, sondern dass die Unterseite bspw. die Form von Keilen, Prismen, Zylinderprismen, sphärischen Linsen, Zylinderlinsen etc. hat.

**32.** Optischer Sensor nach einem der vorangehenden Ansprüche, **dadurch gekennzeichnet, dass** die Lichtquelle zur Beleuchtung von Gittern (101) der mindestens zwei ‚sensing pads' zur gleichzeitigen Beleuchtung der Gitter ausgebildet und angeordnet ist.

**33.** Optisches Verfahren zur Charakterisierung und/oder zum Nachweis einer chemischen und/oder biochemischen Substanz in einer Probe mittels eines mindestens eine Wellenleitergitterstruktur beinhaltenden optischen Wellenleiters (1), wobei
die Probe in mindestens einer eine chemosensitive oder bio-chemosensitive Substanz aufweisenden Kontaktzone mit dem Wellenleiter in Kontakt gebracht wird,
im Wellenleiter im Bereich der mindestens einen Kontaktzone mindestens zwei Lichtwellen über die Wellenleitergitterstruktur angeregt werden, wobei die Lichtwellen sich in ihrer Polarisation, und/oder ihrer Modenzahl, und/oder ihrer Wellenlänge unterscheiden, und/oder die Positionen der mindestens zwei Lichtwellen verschieden sind und die den Positionen der mindestens zwei Lichtwellen zugeordneten bio- und/oder chemoempfindlichen Substanzen unterschiedliche Spezifitäten zeigen oder die einer Position einer Lichtwelle zugeordnete bio- und/oder chemoempfindliche Substanz keine Spezifität zeigt,
mindestens eine der Lichtwellen mit der Probe in Wechselwirkung gebracht wird,
Licht in mindestens zwei unterschiedlichen Anteilen, wovon mindestens ein Anteil vom Bereich der mindestens einen Kontaktzone herkommt, detektiert. wird, und
mindestens ein referenziertes Messsignal erzeugt wird, indem detektierte Lichtanteile der mindestens zwei Anteile des detektierten Lichtes ausgewertet werden.

**34.** Verfahren nach Anspruch 33, **dadurch gekennzeichnet, dass** eine erste und eine zweite der mindestens zwei Lichtwellen über je ein Einkopplungsgitter in den Wellenleiter eingekoppelt und über je mindestens ein Auskopplungsgitter ausgekoppelt werden, wobei die Einkopptungsgitter der ersten und der zweiten Lichtwelle gleichzeitig beleuchtet werden, und dass das referenzierte Messsignal erzeugt wird, indem die Differenz von Sensorsignalen der mindestens zwei Lichtanteile gebildet wird, wobei eines der Sensorsignale - gegebenenfalls mit einem Kalibrierungsfaktor (c) multipliziert wird.

**35.** Verfahren nach Anspruch 33, **dadurch gekennzeichnet, dass** eine Lichtwelle im TE-Mode angeregt wird, dass eine weitere Lichtwelle im TM-Mode angeregt wird, dass diese beiden Lichtwellen mit identischen chemosensitive oder bio-chemosensitive Substanzen in Kontakt gebracht werden, und dass das Sensorsignal durch Auflösung von zwei Gleichungen mit den unbekannten Grössen Sensorsignal und Temperaturänderung berechnet wird.

**36.** Verfahren nach Anspruch 33, **dadurch gekennzeichnet, dass** das Messsignal aufgrund eines Direktnachweises erzeugt wird.

**37.** Verfahren nach Anspruch 33, **dadurch gekennzeichnet, dass** das Messsignal eine Schichtdicke bzw. eine Schichtdickenänderung gemäss Lösung der Modengleichungen für zumindest eine Polarisation, zumindest eine Wellenlänge und zumindest eine Modenzahl ist.

**38.** Verfahren nach Anspruch 33, **dadurch gekennzeichnet, dass** das Messsignal eine Schichtdicke bzw. eine Schichtdickenänderung gemäss Lösung eines linearen Gleichungssystems für zumindest eine Polarisation, zumindest eine Wellenlänge und zumindest eine Modenzahl ist.

**39.** Verfahren nach Anspruch 33, **dadurch gekennzeichnet, dass** das Messsignal aufgrund eines Markierungsnachweises erzeugt wird.

**40.** Verfahren nach den Ansprüchen 36 und 39, **dadurch gekennzeichnet, dass** sowohl ein zum Direktnachweis gehörendes Messsignal als auch ein zum Markierungsnachweis gehörendes Messsignal erzeugt werden.

**41.** Verfahren nach einem der Ansprüche 37-40, **dadurch gekennzeichnet, dass** das Messsignal zeitaufgelöst erzeugt wird.

**42.** Verfahren nach einem der Ansprüche 32-41, **dadurch gekennzeichnet, dass** ein Wellenleiter oder eine Wellenleitergitterstruktur derart gewählt wird, dass der Temperaturkoeffizient des Wellenleiters oder der Wellenleitergitterstruktur bezüglich mindestens einer Probe und bezüglich mindestens eines Messsignals nahezu null ist.

**43.** Verfahren nach einem der Ansprüche 32-42, **dadurch gekennzeichnet, dass** die mindestens zwei Lichtwellen gleichzeitig angeregt werden.

**Claims**

**1.** Optical sensor for the characterization and/or detection of a chemical and/or biochemical substance comprising at least one optical waveguide (1) with a substrate (104), waveguiding material (105), a cover medium (106) and at least one waveguide grating structure,
at least one light source (2) for sending light from the substrate side and/or from the cover medium side to at least a part of the waveguide grating structure,
means for detection of a light distribution, of positions and/or intensities of at least two light proportions emitted from the waveguide grating structure into the substrate and/ or into the cover medium,
**characterized in that**
the waveguide grating structure comprises at least two 'sensing pads' comprising at least one grating (101) and at least one bio- and/or chemo-sensitive substance each,
wherein for the 'sensing pads' at least one of the following conditions is valid:

(a) the light waves guided in the "sensing pads" differ in polarization and/or mode number and/or in wavelength,
(b) the two bio- and/or chemo-sensitive substances allocated to the 'sensing pads' show differing specificities or the bio- and/or chemo-sensitive substance allocated to precisely one "sensing pad" shows no specificity,

that the light source is formed and arrangeable for illuminating gratings (101) of the at least two 'sensing pads', and **in that** means for evaluation of the detected light distribution, the detected positions and/or intensities of at least one light proportion emitted from the side of the first 'sensing pad' into the substrate and/or into the cover medium and of at least one light proportion emitted from the second 'sensing pad' into the substrate and/or into the cover medium are provided for formation of a referenced sensor signal.

**2.** Optical sensor according to claim 1, **characterized in that** the light source is designed and arranged such that the two gratings are illuminated with one single light field.

**3.** Optical sensor according to claim 1 or 2, **characterized in that** means for immovable fixation of the wave guide in relation to the light source are provided and that means for formation of a referenced sensor signal by means of statistical evaluation are provided.

**4.** Optical sensor according to one of the preceding claims 1, **characterized in that** the waveguide grating structure is designed such that it has at least four emitted light proportions, which correspond to the forward and reverse directions of the TE- and TM-Mode.

5. Optical sensor according to one of the preceding claims, **characterized in that** the two 'sensing pads' are adjacent.

6. Optical sensor according to one of the preceding claims, **characterized in that** the two 'sensing pads' differ at least in their grating period.

7. Optical sensor according to one of the preceding claims, **characterized in that** the two sensing pads are located in one another or one above the other.

8. Optical sensor according to one of the preceding claims, **characterized in that** the two 'sensing pads' have an identical grating period or identical grating periods.

9. Optical sensor according to one of the preceding claims, **characterized in that** at least one grating is situated in the volume and/or on a bordering surface of a material contained in the waveguide.

10. Optical sensor according to one of the preceding claims, **characterized in that** each of the at least two 'sensing pads' comprises at least one in-coupling grating and one out-coupling grating.

11. Optical sensor according to one of the preceding claims, **characterized in that** one 'sensing pad' of the waveguide grating structure unit contains two out-coupling gratings and an in-coupling grating situated between the out-coupling gratings, or two in-coupling gratings and an out-coupling grating situated between the in-coupling gratings.

12. Optical sensor according to one of the preceding claims, **characterized in that** the chemo-sensitive or bio-sensitive substance allocated to the first sensing pad shows specificity for a ligand with or without 'non-specific binding' and the chemo-sensitive or bio-sensitive substance allocated to the second sensing pad has no specificity with or without 'non-specific binding'.

13. Optical sensor according to one of the preceding claims, **characterized in that** a "well" or a matrix of "wells" respectively is affixed onto the waveguide grating structure or is inserted into the waveguide grating structure

14. Optical sensor according to one of the preceding claims, **characterized in that** a flow-through cell or a matrix of flow-through cells respectively is affixed onto the waveguide grating structure or is inserted into the waveguide grating structure.

15. Optical sensor according to one of the preceding claims, **characterized in that** a capillary vessel or a matrix of capillary vessels respectively is affixed onto the waveguide grating structure or is inserted into the waveguide grating structure.

16. Optical sensor according to one of the preceding claims, **characterized by** a lens system arranged in-between the wave guide (1) and the detection means.

17. Optical sensor according to one of the preceding claims, **characterized in that** the at least two 'sensing pads' are arranged at a distance from each other.

18. Optical sensor according to one of the preceding claims, **characterized in that** the detection means comprise a 1-dimensional or a 2-dimensional photodiode array, a CCD-line-camera, a CCD-surface camera, a 1-dimensional or 2-dimensional analogue position sensitive detector or a 1-dimensional or 2-dimensional digital position sensitive detector.

19. Optical sensor according to one of the preceding claims, **characterized in that** at least one of the chemo-sensitive or bio-sensitive substances is dextran without an identification molecule.

20. Optical sensor according to one of the preceding claims, **characterized in that** the light source contains a laser-diode or a LED.

21. Optical sensor according to one of the preceding claims, **characterized in that** the grating lines of the waveguide grating structure define a plane with a first direction (y) parallel to the grating lines and a second direction (x) perpendicular to the first direction, that the gratings of the two 'sensing pads' are arranged adjacent to each other and are distanced from each other in the first direction (y).

22. Optical sensor according to one of the preceding claims, **characterized in that** the grating lines of the waveguide grating structure define a plane with a first direction (y) parallel to the grating lines and a second direction (x) perpendicular to the first direction, that each of the at least two 'sensing pads' comprises at least one in-coupling grating and at least one out-coupling grating and that the extent of the at least one in-coupling grating is smaller in y-direction than that of the at least one out-coupling grating.

23. Optical sensor according to one of the preceding claims, **characterized in that** the chemo-sensitive or bio-sensitive substances are present as chemo-sensitive or bio-sensitive layers.

24. Optical sensor according to one of claims 1 through 22, **characterized in that** the waveguide contains the chemo-sensitive or bio-sensitive substances.

25. Optical sensor according to one of the preceding claims, **characterized in that** the substrate consists of plastic.

26. Optical sensor according to claim 25, **characterized in that** an inorganic low-refraction layer is applied to the substrate.

27. Optical sensor according to one of the preceding claims, **characterized in that** the grating structures consist of UV-curable organic or inorganic material and/or organic/inorganic composites.

28. Optical sensor according to one of the preceding claims, **characterized in that** the waveguiding material contains at least one waveguiding film consisting of a high-refraction material, which guarantees the generation of high sensitivities.

29. Optical sensor according to one of the preceding claims, **characterized in that** the waveguiding material contains at least one high-refraction lead-silicate glass or a photo-polymerizable, high-refraction layer or a polymer layer or a PVD-layer or a CVD-layer or combinations thereof.

30. Optical sensor according to one of the preceding claims, **characterized in that** the 'sensing pads' are designed such that the light waves guided in them differ in wavelength and in polarization.

31. Optical sensor according to one of the preceding claims, **characterized in that** the waveguiding material is not plane-parallel to a lower side of the substrate but that the lower side e.g. has the form of wedges, prisms, cylinder prisms, spherical lenses, cylinder lenses, etc.

32. Optical sensor according to one of the preceding claims, **characterized in that** the light source for illuminating the gratings (101) of the at least two 'sensing pads' is designed and arranged for the simultaneous illumination of the gratings.

33. Optical method for characterization and/or detection of a chemical and/or biochemical substance in a specimen by means of an optical waveguide (1) containing at least one waveguide grating structure, wherein
The specimen is brought into contact with the waveguide in at least one contact zone comprising a chemo-sensitive or bio-chemo-sensitive substance,
in the waveguide, in the region of the at least one contact zone, at least two light waves are simultaneously excited through the waveguide grating structure, wherein the light waves differ in their polarization, and/or their mode number, and/or their wavelength, and/or the positions of the at least two light waves are different and the bio- and/or chemo-sensitive substances allocated to the positions of the at least two light waves show differing specificities or the bio- and/or the bio- and/or chemo-sensitive substance allocated to a position one light wave shows no specificity,
at least one of the light waves is brought into interaction with the specimen, light is detected in at least two differing proportions, whereof at least one proportion comes from the region of the at least one contact zone, and
at least one referenced measured signal is generated by the evaluation of detected light proportions of the at least two proportions of the detected light.

34. Method according to claim 33, **characterized in that** a first and a second of the at least two light waves are coupled into the waveguide each via an in-coupling grating and are coupled out each via at least one out-coupling grating, wherein the in-coupling gratings of the first and the second light wave are illuminated simultaneously, and that the referenced measured signal is generated by calculating the difference of sensor signals of the at least two light proportions, wherein one of the sensor signals is possibly multiplied by a calibration factor (c).

**35.** Method according to claim 33, **characterized in that** one light wave is excited in the TE-mode, that a further light wave is excited in the TM-mode, that both light waves are brought into contact with identical chemo-sensitive or bio-sensitive substances, and that the sensor signal is calculated by solving two equations with the two unknown values sensor signal and temperature change.

**36.** Method according to claim 33, **characterized in that** the measured signal is generated due to a direct detection.

**37.** Method according to claim 33, **characterized in that** the measured signal is a layer thickness or a change in layer thickness according to the solution of the mode equations for at least one polarization, at least one wavelength and at least one mode number.

**38.** Method according to claim 33, **characterized in that** the measured signal is a layer thickness or a change in layer thickness according to the solution of a linear system of equations for at least one polarization, at least one wavelength and at least one mode number.

**39.** Method according to claim 33, **characterized in that** the measured signal is generated on the basis of a marking detection.

**40.** Method according to claims 36 and 39, **characterized in that** both a measured signal belonging to the direct detection as well as a measured signal belonging to the marking detection are generated.

**41.** Method according to one of claims 37 through 40, **characterized in that** the measured signal is generated resolved in function of time.

**42.** Method according to one of claims 33 through 41, **characterized in that** a waveguide or a waveguide grating structure is selected in such a manner, that the temperature coefficient of the waveguide or of the waveguide grating structure is practically zero with respect to at least one specimen and with respect to at least one measured signal.

**43.** Method according to one of claims 33 through 42, **characterized in that** the at least two light waves are excited simultaneously.

**Revendications**

**1.** Détecteur optique pour la caractérisation et/ou la détection d'une substance chimique et/ou biochimique, qui contient:

au moins un guide d'ondes optique (1) doté d'un support (104), d'un matériau (105) guide des ondes, d'un milieu de recouvrement (106) et d'au moins une structure de grille de guide d'ondes,
au moins une source de lumière (2) pour envoyer de la lumière sur au moins une partie de la structure de grille de guide d'ondes par le côté du support et/ou par le côté du milieu de recouvrement,
des moyens de détection d'une distribution de la lumière, de positions et/ou d'intensités d'au moins deux parties de la lumière envoyée par la structure de grille de guide d'ondes jusque dans le substrat et/ou dans le moyen de recouvrement,

**caractérisé en ce que**
la structure de grille de guide d'ondes présente au moins deux "sentiers de détection" qui sont tous deux dotés d'au moins une grille (101) et d'au moins une substance biosensible et/ou chimiosensible,
au moins l'une des conditions suivantes étant satisfaite par les "sentiers de détection":

(a) les ondes lumineuses amenées dans les "sentiers de détection" se distinguent par leur polarisation et/ou leur indice modal et/ou leur longueur d'onde,

(b) les deux substances biosensibles et/ou chimiosensibles associées aux "sentiers de détection" présentent des spécificités différentes ou la substance biosensible et/ou chimiosensible associée à l'un des "sentiers de détection" ne présente pas de spécificité,

**en ce que** la source de lumière est configurée et peut être disposée de manière à éclairer les grilles (101) des deux "sentiers de détection" au moins présents et

**en ce que** des moyens d'évaluation de la distribution de la lumière, des positions et/ou des intensités détectées de chaque partie de lumière envoyée par au moins l'un des premiers "sentiers de détection" jusque dans le support et/ou dans le milieu de recouvrement et de la partie de lumière détectée qui est envoyée par au moins l'un des deuxièmes "sentiers de détection" dans le support et/ou dans le milieu de recouvrement sont prévus pour former un signal de détection référencé.

2. Détecteur optique selon la revendication 1, **caractérisé en ce que** la source de lumière est configurée et disposée de manière à éclairer les deux grilles par un seul champ lumineux.

3. Détecteur optique selon les revendications 1 ou 2, **caractérisé en ce qu'**il présente des moyens pour fixer le guide d'ondes en position immobile par rapport à la source de lumière et **en ce qu'**il contient des moyens pour former un signal de détection référencé par évaluation statistique.

4. Détecteur optique selon l'une des revendications précédentes, **caractérisé en ce que** la structure de grille de guide d'ondes est configurée de manière à émettre au moins quatre parties de lumière qui correspondent respectivement à la direction avant et à la direction arrière du mode TE et du mode TM.

5. Détecteur optique selon l'une des revendications précédentes, **caractérisé en ce que** les deux "sentiers de détection" sont situés l'un à côté de l'autre.

6. Détecteur optique selon l'une des revendications précédentes, **caractérisé en ce que** les deux "sentiers de détection" diffèrent l'un de l'autre d'au moins un pas de grille.

7. Détecteur optique selon l'une des revendications précédentes, **caractérisé en ce que** les deux "sentiers de détection" sont situés l'un dans l'autre ou l'un au-dessus de l'autre.

8. Détecteur optique selon l'une des revendications précédentes, **caractérisé en ce que** les deux "sentiers de détection" présentent le même pas de grille ou les mêmes pas de grille.

9. Détecteur optique selon l'une des revendications précédentes, **caractérisé en ce qu'**au moins une grille se trouve dans le volume et/ou sur une surface frontière d'un matériau contenu dans le guide d'ondes.

10. Détecteur optique selon l'une des revendications précédentes, **caractérisé en ce que** chacun des deux "sentiers de détection" au moins prévus présente au moins une grille de couplage et une grille de découplage.

11. Détecteur optique selon la revendication 10, **caractérisé en ce qu'**un "sentier de détection" de l'entité structure de grille de guide d'ondes contient deux grilles de découplage et une grille de couplage disposée entre les grilles de découplage, ou deux grilles de couplage et une grille de découplage disposée entre les grilles de couplage.

12. Détecteur optique selon l'une des revendications précédentes, **caractérisé en ce que** la substance chimiosensible ou biochimiosensible associée au premier "sentier de détection" présente une spécificité pour un ligand avec ou sans "liaison non spécifique", tandis que la substance chimiosensible ou biochimiosensible associée au deuxième "sentier de détection" ne présente aucune spécificité avec ou sans "liaison non spécifique".

13. Détecteur optique selon l'une des revendications précédentes, **caractérisé en ce qu'**un "puits" ou une matrice de "puits" sont appliqués sur la structure de grille du guide d'ondes ou sont insérés dans la structure de grille de guide d'ondes.

14. Détecteur optique selon l'une des revendications précédentes, **caractérisé en ce qu'**une cellule d'écoulement ou une matrice de cellules d'écoulement sont installées dans la structure de grille de guide d'ondes.

15. Détecteur optique selon l'une des revendications précédentes, **caractérisé en ce qu'**une cuvette capillaire ou une matrice de cuvettes capillaires sont appliquées sur la structure de grille du guide d'ondes ou sont installées dans la structure de grille de guide d'ondes.

16. Détecteur optique selon l'une des revendications précédentes, **caractérisé par** un système de lentille disposé entre le guide d'ondes (1) et les moyens de détection.

17. Détecteur optique selon l'une des revendications précédentes, **caractérisé en ce que** les deux "sentiers de détection" au moins présents sont disposés à distance l'un de l'autre.

18. Détecteur optique selon l'une des revendications précédentes, **caractérisé en ce que** les moyens de détection présentent une série unidimensionnelle ou bidimensionnelle de photodiodes, une caméra à ligne CCD, une caméra à surface CCD, un détecteur analogique sensible à la position, à une ou deux dimensions ou un détecteur numérique sensible à la position, à une ou deux dimensions.

19. Détecteur optique selon l'une des revendications précédentes, **caractérisé en ce qu'**au moins l'une des substances chimiosensibles ou biochimiosensibles est le Dextran sans molécule de reconnaissance.

20. Détecteur optique selon l'une des revendications précédentes, **caractérisé en ce que** la source de lumière contient une diode laser ou une LED.

21. Détecteur optique selon l'une des revendications précédentes, **caractérisé en ce que** les lignes de grille de la structure de grille de guide d'ondes définissent un plan dont une première direction (y) est parallèle aux lignes de grille et une deuxième direction (x) perpendiculaire à cette première direction et **en ce que** les grilles des deux "sentiers de détection" sont disposées au voisinage l'une de l'autre et sont situées à distance l'une de l'autre au moins dans la première direction (y).

22. Détecteur optique selon l'une des revendications précédentes, **caractérisé en ce que** les lignes de grille de la structure de grille de guide d'ondes définissent un plan dont une première direction (y) est parallèle aux lignes de grille et une deuxième direction (x) est perpendiculaire à la première direction, **en ce que** chacun des deux "sentiers de détection" au moins présents présente au moins une grille de couplage et au moins une grille de découplage et **en ce que** l'extension de la grille de découplage au moins prévue dans la direction y est plus petite que celle de la grille de découplage au moins prévue.

23. Détecteur optique selon l'une des revendications précédentes, **caractérisé en ce que** les substances chimiosensibles ou biochimiosensibles sont prévues sous la forme de couches chimiosensibles ou biochimiosensibles.

24. Détecteur optique selon l'une des revendications 1 à 22, **caractérisé en ce que** le guide d'ondes contient les substances chimiosensibles ou biochimiosensibles.

25. Détecteur optique selon l'une des revendications précédentes, **caractérisé en ce que** le support est réalisé en matière synthétique.

26. Détecteur optique selon la revendication 25, **caractérisé en ce qu'**une couche minérale à faible indice de réfraction est appliquée sur le support.

27. Détecteur optique selon l'une des revendications précédentes, **caractérisé en ce que** les structures de grille sont constituées de matériaux organiques ou minéraux ou de composites organiques/minéraux, tous aptes à durcir aux UV.

28. Détecteur optique selon l'une des revendications précédentes, **caractérisé en ce que** le matériau guide des ondes contient au moins un film guide des ondes sur un matériau à haut indice de réfraction, ce qui garantit la création de sensibilités élevées.

29. Détecteur optique selon l'une des revendications précédentes, **caractérisé en ce que** le matériau guide des ondes contient au moins une couche de verre au silicate de plomb à haut indice de réfraction ou une couche photopolymérisable à haut indice de réfraction, une couche polymère, une couche appliquée par dépôt physique de vapeur (PVD), une couche appliquée par dépôt chimique de vapeur (CVD) ou une combinaison de celles-ci.

**30.** Détecteur optique selon l'une des revendications précédentes, **caractérisé en ce que** les "sentiers de détection" sont réalisés de manière à ce que les ondes lumineuses qui leur sont amenées se distinguent par leur longueur d'onde et par leur polarisation.

**31.** Détecteur optique selon l'une des revendications précédentes, **caractérisé en ce que** le matériau guide des ondes n'est pas située dans un plan parallèle à un côté inférieur du support mais **en ce que** le côté inférieur a par exemple la forme de biseaux, de prismes, de prismes cylindriques, de lentilles sphériques, de lentilles cylindriques, etc.

**32.** Détecteur optique selon l'une des revendications précédentes, **caractérisé en ce que** la source de lumière prévue pour éclairer les grilles (101) des deux "sentiers de détection" au moins présents est configurée et disposée de manière à éclairer les grilles en même temps.

**33.** Procédé optique de caractérisation et/ou de détection d'une substance chimique et/ou biochimique dans un échantillon au moyen d'un guide d'ondes optique (1) qui contient au moins une structure de grille de guide d'ondes, dans lequel:

les échantillons sont amenés en contact avec le guide d'ondes dans au moins une zone de contact qui présente une substance chimiosensible ou biochimiosensible,
au moins deux ondes lumineuses sont excitées dans le guide d'ondes dans la région de la zone de contact, au moins une, par l'intermédiaire de la structure de grille du guide d'ondes, les ondes lumineuses se distinguant par leur polarisation et/ou leur indice modal et/ou leur longueur d'onde, et/ou les positions des deux ondes lumineuses au moins présentes sont différentes et les substances biochimiosensibles et/ou chimiosensibles associées aux positions des deux ondes lumineuses au moins présentes présentent des spécificités différentes ou la substance biochimiosensible et/ou chimiosensible associée à une position d'une longueur ne présente pas de spécificité,
au moins l'une des ondes lumineuses est mise en interaction avec l'échantillon,
la lumière est détectée en au moins deux parties différentes parmi lesquelles au moins une partie provient de la région de la zone de contact, au moins une et
au moins un signal de mesure référencé est créé par évaluation des parties détectées des deux parties au moins présentes de la lumière détectée.

**34.** Procédé selon la revendication 33, **caractérisé en ce qu'**une première et une deuxième des deux ondes lumineuses au moins présentes sont couplées chacune par une grille de couplage respective du guide d'ondes et sont découplées chacune par au moins une grille de découplage, les grilles de couplage de la première et de la deuxième ondes lumineuses étant éclairées en même temps, et **en ce que** le signal de mesure référencé est créé en formant la différence entre les signaux de détection des deux parties de lumière au moins présentes, l'un des signaux de détection étant éventuellement multiplié par un facteur d'étalonnage (c).

**35.** Procédé selon la revendication 33, **caractérisé en ce que** l'on excite une onde lumineuse en mode TE, **en ce que** l'on excite une autre onde lumineuse en mode TM, **en ce que** ces deux ondes lumineuses sont amenées en contact avec des substances chimiosensibles ou biochimiosensibles identiques et **en ce que** le signal de détection est calculé par résolution de deux équations qui relient les grandeurs inconnues signal de détection et modification de la température.

**36.** Procédé selon la revendication 33, **caractérisé en ce que** le signal de mesure est crée à partir d'une détection directe.

**37.** Procédé selon la revendication 33, **caractérisé en ce que** le signal de mesure est une épaisseur de couche ou une modification d'épaisseur de couche données par la solution des équations de mode pour au moins une polarisation, au moins une longueur d'onde et au moins un indice modal.

**38.** Procédé selon la revendication 33, **caractérisé en ce que** le signal de mesure est une épaisseur de couche ou une modification d'épaisseur de couche données par la solution d'un système d'équations linéaires pour au moins une polarisation, au moins une longueur d'onde et au moins un indice modal.

**39.** Procédé selon la revendication 33, **caractérisé en ce que** le signal de mesure est créé à partir de la détection d'un repère.

**40.** Procédé selon les revendications 36 et 39, **caractérisé en ce que** l'on crée à la fois un signal de mesure qui appartient à la détection directe et un signal de mesure qui appartient à la détection d'un repère.

**41.** Procédé selon l'une des revendications 37 à 40, **caractérisé en ce que** le signal de mesure est crée avec une résolution dans le temps.

**42.** Procédé selon l'une des revendications 33 à 41, **caractérisé en ce que** l'on sélectionne un guide d'ondes ou une structure de grille de guide d'ondes de telle sorte que le coefficient de température du guide d'ondes ou de la structure de grille du guide d'ondes par rapport à au moins un échantillon et au moins un signal de mesure soit pratiquement nul.

**43.** Procédé selon l'une des revendications 33 à 42, **caractérisé en ce que** les deux ondes lumineuses au moins présentes sont excitées simultanément.

Fig. 1

$G_{0-}(TM)$    $G_i(TM)$    $G_{0+}(TM)$

$G_{0-}(TE)$    $G_i(TE)$    $G_{0+}(TE)$

Fig. 3

Fig. 2

a)

$G_{0-}(TM)$   $G_i(TM)$   $G_{0+}(TM)$

$G_{0-}(TE)$   $G_i(TE)$   $G_{0+}(TE)$

b)

$G_i(TM)$

$G_{0-}$   $G_{0+}$

$G_i(TE)$